# EUROPEAN PATENT APPLICATION

(11) **EP 1 387 521 A1**
(43) Date of publication of application: **04.02.2004**
(21) Application number: 02769576.6
(22) Date of filing: 13.05.2002
(51) Int. Cl.: H04L 9/08, H04L 9/10

(54) **ELECTRONIC DEVICE CONTROL APPARATUS**

(30) Priority: 14.05.2001 JP 2001143794
(71) Applicant: MATSUSHITA ELECTRIC INDUSTRIAL CO., LTD., Kadoma-shi, Osaka 571-8501 (JP)
(72) Inventor: MINEMURA, Atsushi, Itabashi-ku, Tokyo 174-0074 (JP); ITO, Masao, Takatsu-ku, Kawasaki-shi, Kanagawa 213-0 (JP); NAKANISHI, Yoshiaki, Suginami-ku, Tokyo 166-0014 (JP)
(74) Representative: Betten & Resch
(86) International application number: PCT/JP2002/004606
(87) International publication number: WO 2002/093826

(57) **Abstract**

The electronics controller and electronic devices can securely share a common key and make an encrypted communication. A serial key of the electronic device controlled by the element to obtain a serial key 102 is obtained. A common key of the electronic device stored at the element to store a common key 103 is encrypted at the element to encrypt a common key 104 by a serial key, and is transmitted to the electronic device by the element to transmit an encrypted common key 106. A common key is shared by the electronics controller and electronic device. A control signal is encrypted by a shared common key, and is transmitted to the electronic device.

## Description

### Field of the Invention

The present invention relates to an electronics controller, which controls electronic devices by communication. In particular, it relates to encrypted communication between the electronics controller and the electronic devices.

### Background of the Invention

Conventionally, and particularly in the case of electronic home appliances, there have been devices to control electronic devices by communication, such as remote control units of televisions or air conditioners. However, since a remote control unit of a television set is compatible only with a television set, a single remote control unit could not control all the electronic home appliances within a home.

The electronics controller relating to the present invention does not control specific electronic devices. However, such controller can control the electronic devices of various electronic home appliances within a home. As such, when various electronic home appliances are controlled by a single electronics controller, this could allow a person with malicious intent to cause the electronic devices to operate inappropriately. Thus, it is necessary to prevent such a situation.

Therefore, it is highly desirable to encrypt the communication between the electronics controller and electronic devices. In particular, it is likely that electronic home appliances would not have advanced computational ability. Thus, the advanced computational ability required for encryption, such as a public key encryption method, cannot be adopted thereto. So, the shared key encryption method that encrypts by having the electronics controller and the electronic devices have a common key must be selected. However, regarding shared key encryption, it is necessary to notify the electronic devices of the common key before safe communication between the electronics controller and the electronic devices can be established. Yet, when the common key is transmitted by communication as it is, this provides a chance for a person with malicious intent to intercept the common key. In particular, when a wireless method using radio or other electromagnetic waves or a wired method using power lines is applied, such a problem may arise.

Additionally, regarding the shared key encryption, a method of interception called a copy attack is known. This allows a person with malicious intent to monitor communications, record the communication, and later transmit such recorded communication thereby possibly causing the electronic devices to malfunction.

Furthermore, it would be convenient for a controller to control electronic home appliances placed in every room of a home. There is desired when multiple electronics controllers exist within one home, so as to control the electronic home appliances with mutual compatibility. Yet, heretofore no such electronics controller has provided such compatibility.

The purpose of the present invention is to resolve such deficiencies.

### Summary of the Invention

In order to resolve such deficiencies, first, a serial key to identify the electronic devices uniquely is obtained, and in order to convey a common key for encryption to the electronic devices, the common key is encrypted by the serial key and transmitted, so communication can be established whereby the electronics controller and the electronic device share a common key. Thus, the electronics controller includes an element to obtain a serial key, an element to encrypt a common key, an element to transmit an encrypted common key, an element to encrypt a control signal by the common key, and an element to transmit the encrypted control signal. In addition, the electronic device includes an element to obtain a common key that is encrypted by a serial key identifying the electronic device, an element to perform decryption, an element to maintain the obtained common key, and an element to decrypt an encrypted control signal by the common key. With this structure, the common key is encrypted and transmitted in order to establish safe communication between the electronics controller and the electronic device. Therefore, a person with malicious intent could not intercept the common key.

Second, a common key is updated and, in order to send the notification of updating to the electronic devices later, where the notification of updating for the common key could not be sent, the electronics controller is equipped with a means to update a common key and an element to register the electronic devices. The electronic devices are equipped with a means to update a common key. Herewith, a common key can be updated, which makes an interception such as a copy attack more difficult.

Third, in order to encrypt and transmit the updated common key to the electronic devices, the electronics controller is equipped with a means to encrypt the second encryption key. Herewith, a common key can be updated so that a new common key would not be known to a person with malicious intent.

Fourth, the electronics controller is equipped with an element to give the number of transmissions, and the electronic devices are equipped with an element to determine a number of transmissions. Herewith, a copy attack can be prevented so that a code not used in the past can be included in the content of a communication.

Fifth, the electronics controller is equipped with an element to accept a transmission request for the common key from the electronic devices. The electronic devices are equipped with an element to request the transmission of the common key. With this structure, a request from the common key can be performed from the electronic devices where the common key has been updated while the communication could not be made when the power was turned off.

Sixth, a means that registers a controller that registers the electronic devices with the electronics controller which will be registered with different electronic devices therefrom, and a means to encrypt the information of the elements to register the electronic devices that encrypts and transmits the information to the registered separate electronics controllers are included. Herewith, multiple electronics controllers can operate in tandem.

### BRIEF DESCRIPTION OF THE DRAWINGS

Fig. 1 is a block diagram showing the structure of the electronics controller of the present invention.
Fig. 2 is a block diagram indicating the structure of the electronic devices of the present invention.
Fig. 3 is a flow chart demonstrating the process to transmit the common key from the electronics controller to the electronic devices.
Fig. 4 is a flow chart showing the process for the electronic devices to receive the common key.
Fig. 5 is a flow chart indicating the process to transmit a control signal from the electronics controller to the electronic devices.
Fig. 6 is a flow chart showing the process for the electronic devices to receive a control signal.
Fig. 7 is a flow chart demonstrating the process of the electronics controller to update a common key.
Fig. 8 is a flow chart showing the process that the electronic devices undergo in order to update a common key.
Fig. 9 is a flow chart indicating the process associated with a number of transmission, and to encrypt and transmit a control signal.
Fig. 10 is a flow chart showing the process of the encrypted and transmitted control signal, associated with the number of transmissions.
Fig. 11 is a diagram of a table showing the number of transmissions stored by the electronic devices managed by the electronics controller.
Fig. 12 is a flow chart demonstrating the process of the electronic devices requesting a common key.
Fig. 13 is a flow chart indicating the process of the electronics controller processing a request for a common key.
Fig. 14 is a diagram of a table showing the common key stored by the electronic devices managed by the electronics controller.
Fig. 15 is a flow chart showing the process to register a separate electronics controller.
Fig. 16 is a flow chart demonstrating the process when a separate electronics controller is registered.
Fig. 17 is a block diagram showing the physical structure of the electronics controller.
Fig. 18 is a block diagram showing the physical structure of the electronic devices.
Fig. 19 is a functional block diagram showing the electronics controller that receives the number of transmission from the electronic devices.
Fig. 20 is a functional block diagram indicating the electronic devices transmitting the number of transmission to the electronics controller.
Fig. 21 is a functional block diagram of the electronic devices securely passing the number of transmissions using the common key for the electronics controller.
Fig. 22 is a flow chart showing the process for the electronics controller to give the number of transmissions.
Fig. 23 is a flow chart demonstrating the process for the electronic devices to determine and update the number of transmissions.
Fig. 24 is a flow chart showing the method to control the electronic devices that receive the encrypted control signal and are controlled.
Fig. 25 is a flow chart showing the method to transmit a control signal to the electronic devices.
Fig. 26 is a functional block diagram of the electronic devices having an element to give the number of transmissions.
Fig. 27 is a diagram showing an authentication sequence used to determine whether the control number transmitted by the electronics controller is authentic or not.
Fig. 28 is a diagram indicating an initial authentication sequence.
Fig. 29 is a diagram showing the sequence to establish a common key for secure communication.
Fig. 30 is a flow chart indicating initialization of the common key the method of establishing a common initial key.
Fig. 31 is a flow chart indicating the method for updating a common initial key.
Fig. 32 is a flow chart demonstrating the method for the electronic devices having an element to give the number of transmissions to transmit a control number.
Fig. 33 is a functional block diagram to indicate the electronic devices having an encryption element.
Fig. 34 is a functional block diagram of the electronic devices having a means to add a signature.

### DETAILED DESCRIPTION OF THE PREFERRED EMBODIMENTS

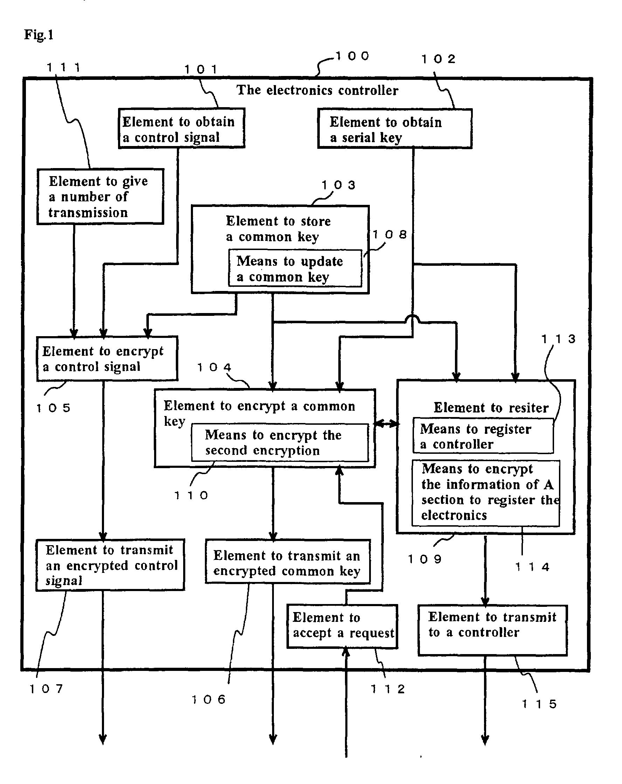

Hereinafter, preferred embodiments of the present invention will be described with reference to Fig. 1 through Fig. 34. In addition, the present invention is not restricted to such embodiments, and can be implemented in various modes to the extent that the present invention does not deviate from the subject matter thereof.

Fig. 1 shows a block diagram of the electronics controller of the present invention, which is composed of an electronics controller 100, an element to obtain a control signal 101, an element to obtain a serial key 102, an element to store a common key 103, an element to encrypt a common key 104, an element to encrypt a control signal 105, an element to transmit an encrypted common key 106, and an element to transmit an encrypted control signal 107. Additionally, there are some embodiments which include an element to update a common key 108, and an element to register the electronic device 109. Furthermore, there are also some embodiments which include an element to encrypt the second encryption key 110, an element to give the number of transmissions 111, an element to receive a request 112, or a means to register a controller 113, an element to encrypt the information of the element to register the electronic device 114 and an element to transmit to a controller 115.

"To obtain a control signal," means a case to obtain such signal from outside by receiving such signal, or the like, and a case to obtain such signal by creating such signal inside.

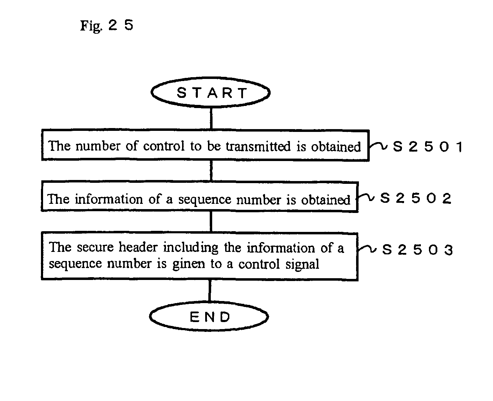

Fig. 25 additionally shows an embodiment where the electronics controller 100 has an element to give a secure header 2516.

Element 101 obtains a control signal transmitted to the electronic devices in order to control the electronic devices. Normally, this element obtains a control signal that is created through the operation by an operator of the electronics controller 100. That is to say, the electronics controller 100 typically has buttons and touch panels, and a control signal is created due to operation by an operator who desires to control the electronic devices. It is the element to obtain a control signal 101 that obtains the control signal. Additionally, the electronics controller 100 may be equipped with any buttons or touch panels, and they are present on a remote control unit. There are some cases where a control signal transmitted via infrared radiation, electromagnetic waves, or cable by the remote control unit is obtained at the element to obtain a control signal 101.

Element 102 obtains a serial key of the electronic devices that are newly controlled by the electronics controller 100. A serial key means a number given to the individual electronic devices in order to specify the individual electronic devices uniquely. For example, such key includes the MAC address of equipment connected to the Ethernet or a serial number including the name of the manufacturer of the electronic devices. In order to obtain a serial key, the electronics controller 100 may be equipped with a means to read a serial key that is input from the numeric keypad with a non-contact method, such that a user of the electronics controller inputs a serial key printed on the electronic device or the manual thereof, a bar-code reader reads the serial key printed by a barcode reader, or a Radio Frequency Identification Tag is used. Additionally, it may also be possible for the element 102 to confirm the input of a password or an individual identification number, or perform identification by IC card, in order to prevent a person with malicious intent from inputting a serial key of the electronic devices.

Element 103 stores a common key to encrypt and perform the communication between the electronics controller and the electronic devices. This common key is shared by the electronics controller and the electronic devices, and is used as a key for encryption when a control signal is encrypted by the electronics controller and when the encrypted control signal is decrypted.

Element 104 encrypts a common key stored in the element to store a common key 103 using the serial key obtained from the element to obtain a serial key 102. That is to say, in order to transmit a common key stored at the element to store a common key 103 to the electronic devices that are newly controlled by the electronics controller 100, the common key is encrypted using the serial key of the electronic devices obtained at the element to obtain a serial key 102 as a key for encryption. As such, the common key that is encrypted where the serial key is used as a key for encryption is called the "encrypted common key."

Element 105 creates an encrypted control signal by encrypting via a common key stored at the element to store a common key 103 so that the control signal obtained at the element to obtain a control signal 101 is transmitted to the electronic devices.

Element 106 transmits an encrypted common key that is created at the element to encrypt a common key 104.

Element 107 transmits an encrypted control signal that is created at the element to encrypt a control signal 105.

In addition, the method of transmission for the encrypted common key and encrypted control signal from the electronics controller 100 to the electronic devices may be a wireless method using infrared radiation other electromagnetic waves, or a wired method using power lines.

The method of establishing a common initial key, which is a method to allow the common key to encrypt the communication of the electronic devices to be available for the electronic devices, is explained hereinafter.

In order to initialize the common key, a serial key unique for the electronic devices is input into a node having a function of setting up a key to communicate with the electronic devices. The common key is encrypted by the serial key and transmitted from the aforementioned node having a function to set up a key to the electronic devices. The "node having a function to set up a key" means the device having a function to set up a key. The node having a function to set up a key may include a third device if such device has the function to set up a key, in addition to the electronic devices and electronics controller of the parties concerned performing communication.

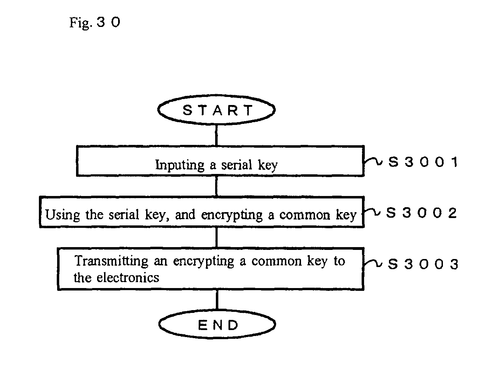

Fig. 30 is a flow chart more specifically showing the method of establishing a common initial key, which is a method to cause the common key of the electronics controller to be shared with the electronic devices, in order to encrypt the communication between the electronic devices and the electronics controller.

In step S3001, a serial key determined uniquely for all electronic devices is input into the electronics controller (step to input the serial key). The serial key input is obtained at the element to obtain a serial key 102.

In step 3002, using the serial key input in accordance with the step to input the serial key (S3001), a common key of the electronics controller is encrypted. The common key of the electronics controller may be a common key that the electronics controller has already stored at the element to store a common key 103. When the electronics controller does not have such common key, a new common key may be newly created. The common key is encrypted at element 104 of the electronics controller 100.

In the step 3003, a common key encrypted in step to encrypt a common key (step S3002) is transmitted to the electronic devices (step to transmit an encrypted common key). The encrypted common key is transmitted to the element to transmit an encrypted common key 106 of the electronics controller 100.

The means to update a common key 108 creates a new common key, which is different from the already-encrypted and transmitted common key. In addition, this means to update a common key 108 is not essential to the structure of the electronics controller 100.

The element to register the electronic device 109 associates the new common key created at the means to update a common key 108 and the serial key of the electronic devices to which such common key is transmitted, and it stores them. Therefore, the element to register the electronic device 109 manages a table to associate the serial key of the electronic devices to which the common key is transmitted. The information stored in such table is called "the information relating to the electronic devices." Additionally, the electronic devices where the serial key is stored in such table are called "the registered electronic devices." In addition, an element to register the electronic device 109 is not essential to the structure of the electronics controller 100.

The means to encrypt the second encryption key 110 encrypts a new common key created by the means to update a common key 108, by the already-encrypted and transmitted common key. In addition, such means to encrypt the second encryption key 110 is not essential to the structure of the electronics controller 100.

The method of updating a common key, which is a method to update a common key used by the electronic devices in order to encrypt the communication with the electronics controller, is explained hereinafter. The node having a function to set up a key encrypts and transmits the new common key to the electronic devices by an existing common key that is shared between the electronic devices and the node having a function to set up a key.

Additionally, it would be convenient to use the newest existing common key for the existing common key that would encrypt a new common key. This is because the newest common key is thought to have a lower possibility of being intercepted by a third party with malicious intent. Since such common key is the newest, a party with malicious intent does not have sufficient time to analyze the communication between the electronic devices and electronics controller and acquire the information about the common key.

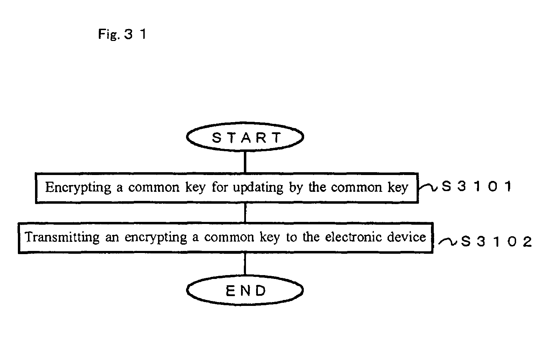

Fig. 31 is a flow chart showing the method of updating a common key of the electronics controller (the node having a function to set up a key in this explanation), and which is held by the electronic devices, so as to encrypt the communication between the electronic devices and electronics controller.

In step S3101, in the electronics controller, a common key for updating, which is a new common key, is encrypted by the common key, which is already shared with the electronic devices (step to encrypt a common key for updating). Encryption is done by the means to encrypt the second encryption key 110 of the electronics controller.

In step S3102, the common key for updating that is encrypted in the step to encrypt a common key for updating (step S 3101) is transmitted to the electronic devices (step to transmit the encrypted common key for updating). The encrypted common key is transmitted via the element to transmit an encrypted common key 106 of the electronics controller.

Upon receiving the transmission, the electronic devices may operate thereinafter. First, using the common key that is already used between the electronic devices and the electronics controller (hereinafter known as the "pre-master key"), the encrypted common key transmitted from the electronic controller is decrypted. Through decryption, the electronic devices obtain a new common key. When obtaining a new common key, the electronic devices transmit a reply confirming reception of a new key using the pre-master key, as an encrypted communication.

Also, the electronics controller may operate as follows, regarding a reply from the electronic devices. The electronics controller established reception of the encrypted communication using the pre-master key from the electronic devices, confirming the contents of the communication using the pre-master key, and utilizing the new common key from the next communication with the electronic devices that have transmitted such communication.

Furthermore, there is a possibility that the electronic devices cannot obtain a new common key due to the power thereof being shut off, when the electronics controller intends to communicate in order to update a common key to a electronic device, or the like. In this case, when the electronic device which is turned off is turned on again, the electronic device requests that the electronic device should set up a common key (for updating), in order to recover a non-updated common key, when the updating of a common key has been made during the time that the power was off. The management device of electronics controller that receives the request for setting up a common key (for updating) causes a new common key to be shared as above, by the encrypted communication, used by the pre-master key.

Element 111 associates the number of transmissions that is different for every transmissions of a control signal. The number of transmissions means a code. For the number of transmissions to be associated means that encryption at the element to encrypt a control signal 105 is made so as to include the number of transmissions in the encrypted control signal transmitted at the element to transmit an encrypted control signal 107. Additionally, "different" means that no number of transmissions is the same as the number of transmissions associated with a previously received encrypted control number, for the electronic device as a party to which the encrypted control number is transmitted. In addition, the element to give the number of transmissions 111 is not essential to the structure of the electronics controller 100.

Additionally, as one of the modes of the element to give the number of transmissions, an element to give a secure header may be included. This element provides a secure header for the signal transmitted to the electronic devices. The secure header includes a sequence number field, and the sequence number field further includes the information of sequence number. The secure header means the header that is added to the control signal transmitted and received between the electronics controller and the electronic devices, and which is to perform the communication in a secure manner.

"Information of sequence number" means the information showing the different sequence numbers for each transmission of the control signal. The sequence number is included in the number of transmissions above in that the sequence number is normally a consecutive number. However, there are some cases where the same number is used, rather than a consecutive number, or a new sequence number, using random numbers or the like, is used regardless of the sequence number that has been used before, when authentication upon communication has failed. For instance, a different sequence number is given for every transmission of the control signal. However, when a retransmission is made, such as in the case of a transmission error, it is possible not to give a different number.

"Control signal" means a signal of information, a command, or other management information using the control directly and/or indirectly.

For example, control signals may correspond to the following cases: information about input temperature, information about giving a command for dehumidifying or heating, information about air-cooling, timer-controlled information, information about the present room temperature from the temperature sensor for air-conditioning, information about present humidity from a hygrometer for air-conditioning, or the like, when room temperature is adjusted by air-conditioning.

In addition, control signals include information to control the illumination in a room, information to give a command turning the lighting on and off, information to control the atmosphere of the room by a combination of lighting, information about temperature setting inside a refrigerator, information to notify that the expiration date of foods inside a refrigerator is approaching, information about recipes for cooking that can be made from the foods inside the refrigerator, and information regarding the operation for a stove. It also includes the information for the adjustment of the temperature of a stove, information to set a television channel, television recording information, information to give a command to display commercials, information to set a telephone, information to control a laundry machine, information about setting the temperature of an iron, information about setting the temperature of an electric pot, information about setting the temperature of an electric blanket, information about setting an intercom for visitors that is installed at an entranceway, information to control the hot water of a bath, information to control the amount of water in a bath, information about moving the position of electronically operated shutters, information to give a command to open and close blinds, and the like. Therefore, such control information may be transmitted from the electronics controller to the electronic devices as a matter of course, and vice versa, as well.

A case where the electronic devices transmit the control information, for example, is a case where a refrigerator as the electronic devices transmits a command regarding the environment of the refrigerator as control information to the electronics controller.

Here, the "command regarding the environment inside the refrigerator" means the command to force the controller to transmit the information relating to the environment inside the refrigerator to a cellular phone (control information).

For example, it is possible to inquire about the environment inside the refrigerator from a cellular phone from outside the home to the electronics controller at home, or to the refrigerator directly. Then, the refrigerator that has received such an inquiry (including a case where an inquiry is received via the electronics controller) performs the process to notify the cellular phone of the environment therein. When the notification is given via the electronics controller, the refrigerator transmits the command to notify the electronics controller of the environment inside the refrigerator. Of course, thereupon, the information relating to the environment inside the refrigerator should be passed to the electronics controller.

Additionally, the electronic device to be controlled (electronic device 1) obtains at least part of the control information from separate electronic devices (electronic device 2) in some cases. For example, upon controlling the breech mechanism for the shutters (electronic device 1), a humidity sensor (electronic device 2) installed in the garden detects the weather situation, and transmits a command to open or close (control information) to the breech mechanism for the shutters via the electronics controller.

Also, when the electronics controller changes its target from a lighting sensor for detecting the brightness outside to the humidity sensor, the control information is transmitted from the electronic devices to the electronics controller.

Control signals may further request authentication. Authentication means that both the electronics controller and electronic devices determine whether or not the other is an authenticated device. When the device of the other party that has transmitted a control signal is recognized as an authenticated device, execution of the control command, or the like can commence. Authentication may be performed initially when the communication is made, information for authentication may be added to the transmission of the control signal. The information of the sequence number may be added to this request of authentication. The information regarding "a common key" to perform the encrypted communication may be treated as a control signal. In addition, the same interpretation of the "control signal" is applied to the electronics controller and electronic devices. The interpretation of the control signal has the same meaning in the entirety of this application.

The electronics controller has an element to give a secure header. The purpose of this is to securely transmit and receive the control signal to and from the electronic devices.

Fig. 25 is the method of transmitting a control signal to the electronic device described above.

In step S2501, a control signal to be transmitted is generated (step to generate a control signal).

In step 2502, the information about a sequence number (that is, the information indicating the different sequence number for every transmission of the control signal) is obtained (step to obtain the information of a sequence number).

In step 2503, the secure header including the information of a sequence number obtained in the step to obtain the information of a sequence number is given to the control signal in the step to generate a control signal (step to give a secure header).

The electronics controller is shown hereinafter, having the characteristics that the number of transmissions is acquired by receiving the number of transmissions transmitted by the electronic devices, and that a control signal is securely transmitted to the electronic devices using the number of transmissions. The electronics controller here receives the number of transmissions to which the process of updating is performed and which is transmitted, and transmits the same number that is given to the control signal.

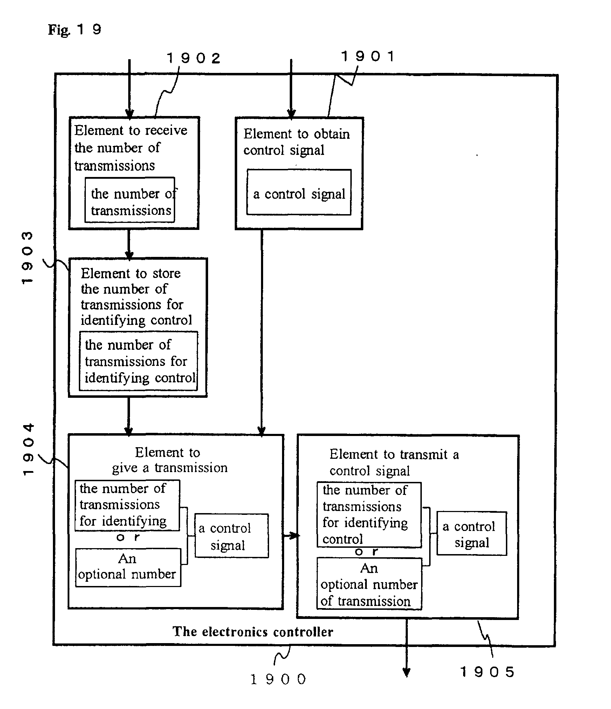

Fig. 19 is an example of a functional block diagram of the electronics controller of the present invention. The electronics controller 1900 includes an element to obtain a control signal 1901, an element to receive the number of transmissions 1902, an element to store the number of transmissions for identifying control 1903, an element to give the number of transmissions 1904, and an element to transmit a control signal 1905.

Element 1901 obtains a control signal. Normally, a control signal created by the operation of an operator of the electronics controller 1900 who desires to control the electronic devices are obtained. Specifically, when an operator intends to set up a temperature of 25 degrees for air-conditioning (an electronic device), such temperature is set by operating the buttons of the remote control unit of the electronics controller. In addition, the targets for operation are not only in the electronic devices, but also in the electronics controller itself in some cases. For instance, an operator operates air-conditioning via the electronics controller placed in the home, from a phone outside the home as an electronics controller. A control signal received by the element to receive a control signal 1901 is passed to the element to give the number of transmissions 1904.

In addition, there is a case where a control signal is created within the electronics controller. Specifically, the electronics controller with a temperature sensor automatically operates the air-conditioning as the electronic device, according to the situation of the temperature, and adjusts the room to a suitable temperature.

Element 1902 receives the number of transmissions from the electronic device. The number of transmissions is associated with every transmission of the control signal. Here, in order to prevent a party pretending to be an operator from the transmitting the unauthorized control signal from outside, the electronic device uses the number of transmissions transmitted from the electronic device when the electronic device had authenticated the electronics controller at a previous time. Here, authentication means determination as to whether or not the electronics controller is authenticated by the number of transmissions received by the electronic device, or the like (reverse authentication is possible). The number of transmissions received from the electronic device at a previous time is passed to the element to store the number of transmissions for identifying control 1903 for use.

Element 1903 stores the number of transmissions received at the element to receive the number of transmissions as the number of transmissions for identifying control. Here, the number of transmissions and the number of transmissions for identifying control have the same value. The number of transmissions for identifying control is in the state of being stored until the transmission of the control signal is made, and upon transmitting the control signal, such number is passed to element to give a number of transmissions 1904.

The element to give the number of transmissions 1904 determines whether the number of transmissions is the number of transmissions for identifying control or an optional number of transmissions that is optionally created when the number of transmissions for identifying control at the element to store the number of transmissions for identifying control is not held, for every transmission of control signal obtained at the element to generate a control signal. A case where the number of transmissions for identifying control is not stored is a case where an electronics controller has just been newly purchased, or the like. In such case, the number of transmissions is optionally created. A method of creating a number of transmissions optionally is a method to cause a random number, or a method to use a specific initial value. The associated number of transmissions is passed to the element to transmit a control signal 1905.

The element to transmit a control signal 1905 associates the control signal obtained at the element to obtain a control signal with the number of transmissions associated at the element to give the number of transmissions. Here, the number of transmissions is either the number of transmissions for identifying control or an optional number of transmissions. A control signal associated with the number of transmissions and transmitted may be optionally encrypted. However, from a viewpoint of performing communication securely, an encrypted signal is preferable. Furthermore, a signal to which an authenticated signature has been added is preferable. The control signal transmitted is received by the electronic devices.

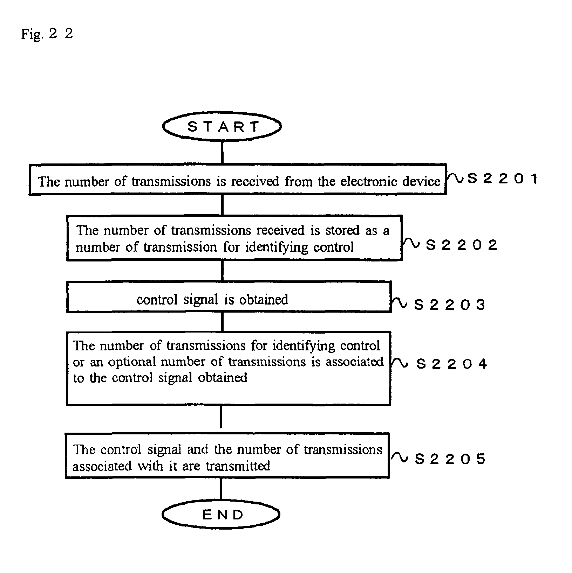

Fig. 22 is a flow chart of the process for the electronics controller to give the number of transmissions.

In step S2201, the number of transmissions is received from the electronic devices (step to receive the number of transmissions).

In step S2202, the number of transmissions received in the step to receive the number of transmissions is stored as the number of transmissions for identifying control (step to store the number of transmissions for identifying control).

In step S2203, a control signal is obtained (step to obtain a control signal).

In the step S2204, determination is made as to whether the number of transmissions is the number of transmissions for identifying control or an optional number of transmissions that is created when the number of transmissions for identifying control at the element to store the number of transmissions for identifying control is not held, for every transmissions of control signal obtained at the element to obtain a control signal (step to give the number of transmissions).

In step S2205, the control signal obtained in the step to obtain a control signal is associated with the number of transmissions associated in the step to give the number of transmissions, and is transmitted (step to transmit a control signal).

Element 112 receives a request from the electronic devices for transmission of a common key. In order to obtain the updated common key while the electronic devices have not been able to communicate with the electronics controller 100, due to a reason of the power thereof being shut off or the like, such request is issued therefrom. When such request is received at element 112, the key for encryption stored at the element to store a common key 103 is encrypted, and is transmitted to the electronic device that has issued the request. In addition, element 112 is not essential to the structure of the electronics controller 100.

Element 113 determines if the electronic devices to be registered are compatible with the electronics controller. Since the electronics controller is a type of electronic device, it has a serial key. Additionally, the electronics controller 100 and the electronic devices to be registered are required to share a common key. Thus, it is necessary for a serial key and a common key to be associated and stored at the element to register the electronic device 109.

The registered electronics controller is required to transmit the information of the registered electronic devices. Thus, it is necessary that a serial key and common key that are associated must be stored, separating the electronics controller from ordinary electronic devices. In addition, the means to register a controller 113 is not essential to the structure of the electronics controller 100.

The means to encrypt the information of the element to register the electronic devices 114 uses as a key for encryption the serial key of the electronics controller to encrypt the information registered at the element to register the electronic devices 109 for the electronics controller registered at the means to register a controller 113. The information registered at the element to register the electronic devices 109 means the information relating to the electronic devices. In addition, the means to encrypt the information of the element to register the electronic devices 114 is not essential to the structure of the electronics controller 100.

The element to generate a transmission to a controller 115 transmits the encrypted information by the means to encrypt the information of the element to register the electronic devices 114 to a separate electronics controller registered by the means to register a controller 113. In addition, the element to make a transmission to a controller 115 is not essential to the structure of the electronics controller 100.

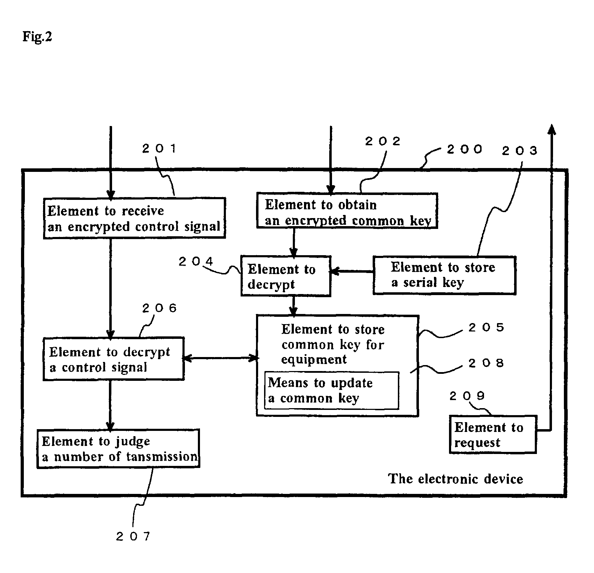

Fig. 2 is an example of a block diagram of the electronic devices controlled by the electronics controller 100. Electronic device 200 includes an element to receive an encrypted control signal 201, an element to obtain an encrypted common key 202, an element to store a serial key 203, an element to decrypt 204, an element to store a common key for equipment 205, and an element to decrypt a control signal 206. Additionally, electronic device 200 may be composed of an element to determine the number of transmissions 207, a means for updating a common key 208 or an element to request 209.

Element 201 receives an encrypted control signal transmitted from the element to transmit an encrypted control signal 107 of the electronics controller 100.

Element 202 obtains an encrypted common key that is encrypted by a serial key identifying the electronic device 200 uniquely.

Element 203 stores a serial key so as to decrypt the encrypted common key obtained at the element to obtain an encrypted common key 202, and to cause such key to be a common key.

Element 204 decrypts the encrypted common key obtained at the element to obtain an encrypted common key 202 by a serial key stored at the element to store a serial key 203, and to cause such key to be a common key.

Element 205 stores the encrypted common key decrypted at the element to decrypt 204.

Element 206 decrypts the encrypted control signal received at the element to receive an encrypted control signal 201 by the common key stored at the element to store a common key for equipment 205.

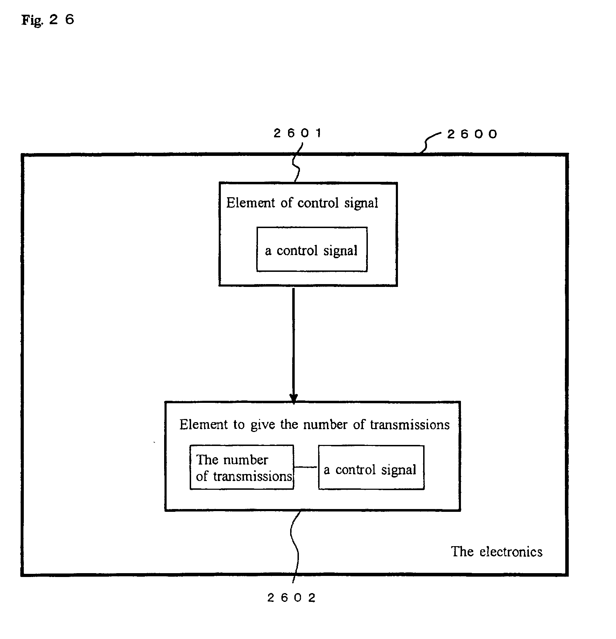

As shown in Fig. 26, the electronic device may have an element to give the number of transmissions.

The electronic device 2600 shown in Fig. 26 includes an element to obtain a control signal 2601 and an element to give the number of transmissions 2602.

Element 2601 obtains a control signal to transmit to other electronic devices or to an electronics controller.

"To obtain a control signal," means a case to obtain such signal from outside by receiving such signal, or the like, and a case to obtain such signal by creating such signal inside. Any of these cases may apply. An element to obtain a control signal held by the electronic devices creates a control signal inside and obtains it, normally. For example, a control signal created inside is a signal where air-conditioning as the electronic device stores the room temperature suitable based on the temperature detected by its own temperature sensor. Also, there is a case where information to respond to authentication is created inside as a control signal, regarding the request of authentication, and is obtained by the electronics controller thereafter.

There is a case where although the electronic devices are controlled by the electronics controller, the electronic devices transmit a control signal to others themselves. The party to which such control signal is transmitted is represented by other electronic devices. In addition, there is also a case where a control signal is transmitted to the electronics controller. As for a case where a control signal is transmitted to the electronics controller, the air-conditioning as electronic device passes the temperature detected by its own temperature sensor to the electronics controller, or the information for responding to authentication (this is also a control signal) is transmitted upon receiving a control signal from the electronics controller.

The element to give the number of transmissions 2602 associates the number of transmissions with every transmission of a control signal, in principle. However, there are some cases where the same number is used, rather than the next consecutive number, or a new sequence number, using random numbers or the like is used regardless of the sequence number that has been used before, when the authentication upon communication has failed. For instance, a different number of transmissions is given for every transmission of the control signal. However, when a retransmission is made, such as in the case of a transmission error, it is possible not to give a different number.

As for a case where the number of transmissions is added to a control signal received by the electronic devices and is transmitted as it is, for example, when the electronic devices should be controlled by transmitting a control signal to the electronics controller, the received control signal is transmitted as it is via the electronic devices or the like. This method is effective when a control signal cannot be transmitted directly to the electronics controller. As a specific example, when the control signal transmitted from a remote control unit cannot be transmitted to the electronics controller due to obstructions, such control signal is transmitted to the electronics controller via a ventilation fan as the electronic device or the like. In such case, the ventilation fan transmits the received control signal to the electronics controller substantially unchanged. The electronics controller that receives the control signal controls the ventilation fan based on the control signal.

The element to give the number of transmissions of the electronic devices have basically the same function as the element to give the number of transmissions of the electronics controller, mentioned above.

The electronic devices associate the internally generated control signal or the externally received control signal with the number of transmissions, and transmit such control signal to the other party (such as electronic devices or an electronics controller).

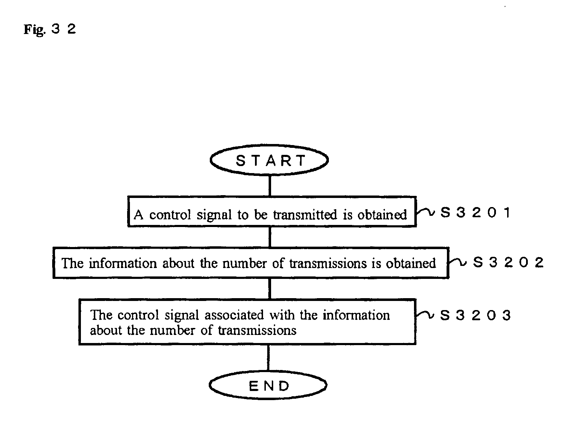

Fig. 32 is the method for the electronic devices described above to transmit a control signal to the electronics controller.

In step S3201, a control signal to be transmitted is obtained (step to obtain a control signal).

In step S3202, the information about the number of transmissions, which is information showing a different sequence number for every transmission of a control signal, is obtained (step to obtain the information about a number of transmission).

In step S3203, the control signal obtained at the step to obtain a control signal is associated with the information about the number of transmissions obtained in the step to obtain the information about the number of transmissions (step to give the number of transmissions).

Additionally, as one of the modes of the element to give the number of transmissions, an element to give a secure header may be held.

The element to give a secure header gives a secure header for the signal transmitted to the electronics controller (there may be a case where other electronic devices are applied). The secure header includes the sequence number field and the sequence number field further includes information regarding sequence number.

The method to transmit a control signal by communication to the electronics controller described above is shown hereinafter. The flow of the process is the same as that in Fig. 32, and is different in that the subject matter is the electronics.

First, a control signal to be transmitted is obtained (step to obtain a control signal).

Second, the information of a sequence number is obtained, which is the information showing a different sequence number for every transmission of a control signal (step to obtain the information of a sequence number).

Last, a secure header including the information of the sequence number obtained in the step to obtain the information of a sequence number is given to the control signal obtained at the step to obtain a control signal (step to give a secure header).

The electronic devices having the characteristic of transmitting the number of transmissions to the electronics controller is shown hereinafter. The electronic devices here perform the process of managing and updating the number of transmissions, and transmit the control signal to which the number of transmissions is given to the electronics controller or the like.

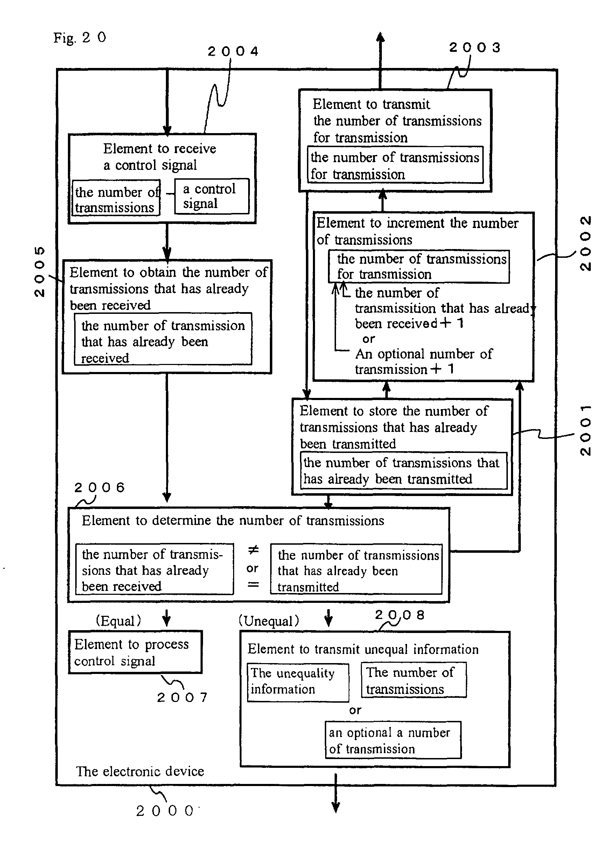

Fig. 20 is a block diagram of the electronic device to be controlled by the electronics controller 1900. The electronic device 2000 includes an element to store the number of transmissions that has already been transmitted 2001, an element to increment the number of transmissions 2002, an element to transmit the number of transmissions for transmission 2003, an element to receive a control signal 2004, an element to obtain the number of transmissions that have already been received 2005, an element to determine the number of transmissions 2006, an element to process a control signal 2007, and an element to transmit unequal information 2008.

Element 2001 performs the process of storing the number of transmissions that have already been transmitted to the electronics controller. The number of transmissions is transmitted by element 2003, which becomes the number of transmissions that has already been transmitted, and which is stored at the element to store the number of transmissions that has already been transmitted. The purpose of storing the number of transmissions that have already been transmitted is to obtain the number of transmissions that have already been transmitted that is associated with the control number received later, and to determine whether they correspond with each other. The stored number of transmissions that have already been transmitted is passed to the element to determine the number of transmissions 2006 and the element to increment the number of transmissions 2002.

The element to increment the number of transmissions 2002 obtains the number of transmissions that have already been transmitted from the element to store the number of transmissions that have already been transmitted. Or, it obtains an optional number of transmissions, which is the number of transmissions optionally created when the number of transmissions that have already been transmitted is not stored at the element to store the number of transmissions that have already been transmitted. It increments the number of transmissions, which will become the number of transmissions for transmission.

Normally, the number of transmissions that have already been transmitted is stored at the element to store the number of transmissions that have already been transmitted. However, when such number is stored in the volatile memory, or the like as a physical structure, at the time of turning off the power of the electronic device, the stored number of transmissions that have already been transmitted will be erased. Thus, immediately after the power of the electronic device is turned on, the number of transmissions that have already been transmitted has not been stored. So, it is necessary to optionally create the number of transmissions.

"To optionally create" here means to create the number of transmissions not based on the number of transmissions that have already been transmitted. Yet this does not hinder the possibility that such number be the same thereas. As for a method to create the number of transmissions, there are methods to generate and use a random number, to use a specific initial value, or the like.

"Increment" means a case where a certain value is added to an original value. In addition, it may mean broadly updating values, as well. That is to say, for example, it may involve an increment process, multiplication process using a constant, or the like (the term "increment" in this specification has the same meaning hereinafter).

Here, the increment process may be executed only when a result at the element to determine the number of transmissions 2006 is determined to be matched. The number of transmissions that have already been transmitted obtained at the element to store the number of transmissions that have already been transmitted, or the number of transmissions optionally created is incremented and prepared for the next receipt of a control signal. Due to the incrementing process, the number of transmissions that have already been transmitted or an optional number of transmissions is passed to the element to transmit the number of transmissions for transmission 2003 as the number of transmissions.

Element 2003 transmits the number of transmissions for transmission. The number of transmissions that have already been transmitted is transmitted by element 2003. Thereby, the number of transmissions for transmission will become the number of transmissions that have already been transmitted, which will be passed to the element to store the number of transmissions that have already been transmitted. Additionally, the transmitted number of transmissions is received by the electronics controller.

Element 2004 receives a control signal associated with a number of transmission. The received control signal here may be optionally encrypted. From a viewpoint of performing secure communications, an encrypted control signal is preferable. Additionally, a control signal with an authenticated signature is even more preferable. The number of transmissions associated with the received control signal is the most recent number among the number of transmissions transmitted from the element to transmit the number of transmissions for transmissions of the electronic devices. The number of transmissions associated with the received control signal is passed to the element to obtain the number of transmissions that have already been received 2005 and the control signal is passed to the element to process a control signal 2007.

Element 2005 obtains the number of transmissions that has already been received as the number of transmissions associated with the received control number at the element to receive a control signal. The obtained number of transmissions that have already been received is passed to the element to determine the number of transmissions 2006.

Element 2006 determines whether the obtained number of transmissions that have already been received at the element to obtain the number of transmissions that have already been received and the number of transmissions that have already been transmitted stored at the element to store the number of transmissions that have already been transmitted are equal. This determination is the process of authentication in order to determine whether or not the party that has transmitted a control signal is an authentic device (that is, if it is acceptable to execute a control signal). Such process of authentication can prevent a party pretending to be an operator outside from transmitting an unauthorized control signal. Due to the result this determination, the following different processes are performed as follows.

When the result of the determination at the element to determine the number of transmissions is that the situation is "equal," element 2007 performs the process in order to execute a control signal associated with the number of transmissions that have already been received. When the result of determination at the element to determine the number of transmissions is that the situation is "equal," it is acceptable to determine that such control signal is the one transmitted from the authenticated electronics controller. Thus, the prescribed operations are executed. Here, it may be acceptable to cause the element to increment the number of transmissions 2002 to execute the increment process as a preparation to notify the electronics controller of the next control signal.

When the result of the determination at the element to determine the number of transmissions is that the situation is "unequal," the element to transmit unequal information 2008 transmits the unequal information showing that a result of the determination is not equal, the number of transmissions transmitted at the previous transmission, or an optional number of transmissions, into the electronics controller.

"The number of transmissions transmitted at the previous transmission" means the number of transmissions that have been most recently transmitted among the number of transmissions that have already been transmitted. The electronics controller receiving the number of transmissions can determine that the control signals have not been transmitted due to the unequal information. Additionally, the time when the unequal information is sent to the electronics controller is set as the time immediately after the electronic devices have received the control signals. Then, the electronics controller can also determine which control signal has not been transmitted. When the control signals have been authentically transmitted, the number of transmissions that adds increments of one to the number of transmissions that have already been transmitted is supposed to be returned. The number of transmissions that have already been transmitted or an optional number of transmissions may be used when a control signal is transmitted next time.

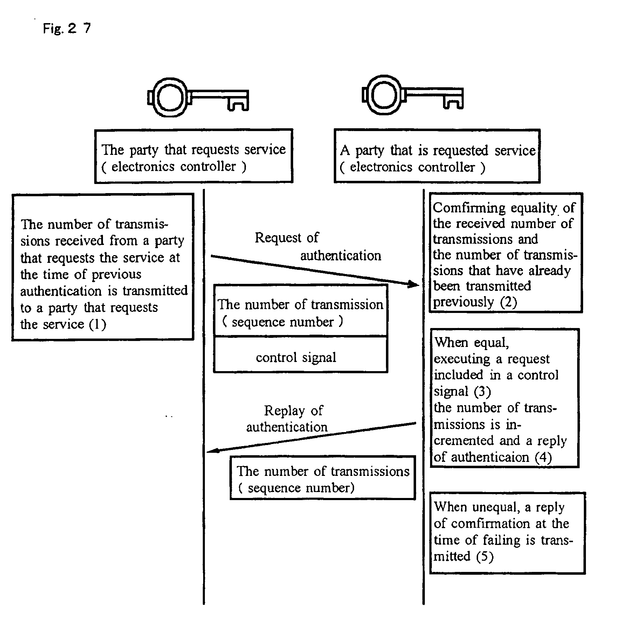

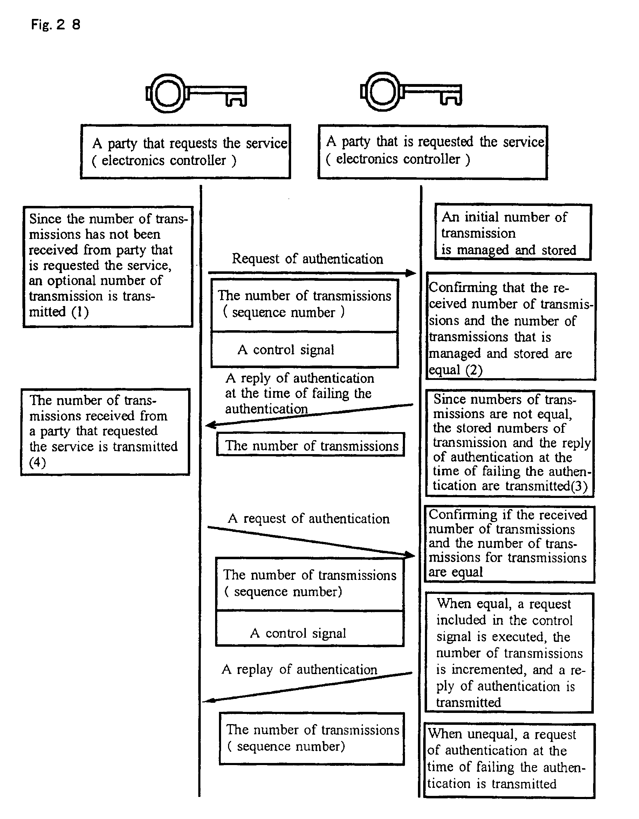

Fig. 27 and 28 is the sequence of the processes mentioned above in a frame format manner.

Fig. 27 is the authentication sequence for determining whether or not a control signal transmitted from the electronics controller is authentic.

First, the electronics controller as a party that requests the service transmits the number of transmissions received from the electronic devices as a party that requests the service at the time of previous authentication (sequence number) with a control number (1). The electronics controller may create an authenticated signature (signature that is added so as to guarantee the party that transmits data) using a common key or the like, and transmit such signature therewith.

The party that requests the service (electronics) confirms the equality of the received number of transmissions and the number of transmissions that have already been transmitted previously (the number of transmissions that have already been transmitted) (2). Additionally, the equality of the received authenticated signature and the authenticated signature computed from a common key or the like is confirmed.

When both the number of transmissions and an authenticated signature are verified, the request included in the control signal is executed (3). The number of transmissions (sequence number) is incremented, and a reply of authentication is transmitted, including a number of transmissions (sequence number) and an authenticated signature (4).

When neither the number of transmissions (sequence number) nor an authenticated signature is verified, that is, when authentication has failed, an authenticated signature is created by the number of transmissions that have already been transmitted previously or a common key or the like, and a reply of authentication at the time of failing is transmitted (5).

Fig. 28 is an initial authentication sequence. An initial authentication sequence means a sequence that communicates with the initial number of transmissions when no communication between the electronics controller and the electronic devices has yet taken place, or when the electronics controller has lost the number of transmissions that is transmitted from the electronic devices, even though communication of the number of transmissions has been made. Figure 28 indicates an initial authentication sequence when the electronics controller as a party that requests the service requests an initial authentication to the electronic devices as a party that requests the service. Since a party that requests the service (electronics controller) has not previously received the number of transmissions (sequence number) from a party that requests the service (electronic devices), a party that requests the service (electronics controller) transmits a request for authentication for an optional number that is included in the sequence number field of transmissions to a party that requests the service (electronic devices) (1).

Since a party that requests the service (electronic devices) is different from the managed number of transmissions (sequence number) (2), a reply of authentication at the time of "failing the authentication" including the managed number of transmissions (sequence number) is transmitted to a party that requests the service (electronics controller) (3). The party that requests the service (electronics controller) transmits a request of authentication including in the sequence number field for the request of authentication at the time of "failing the authentication" to the party that requests the service (electronic devices) (4). The following processes are the same as those of Fig. 27.

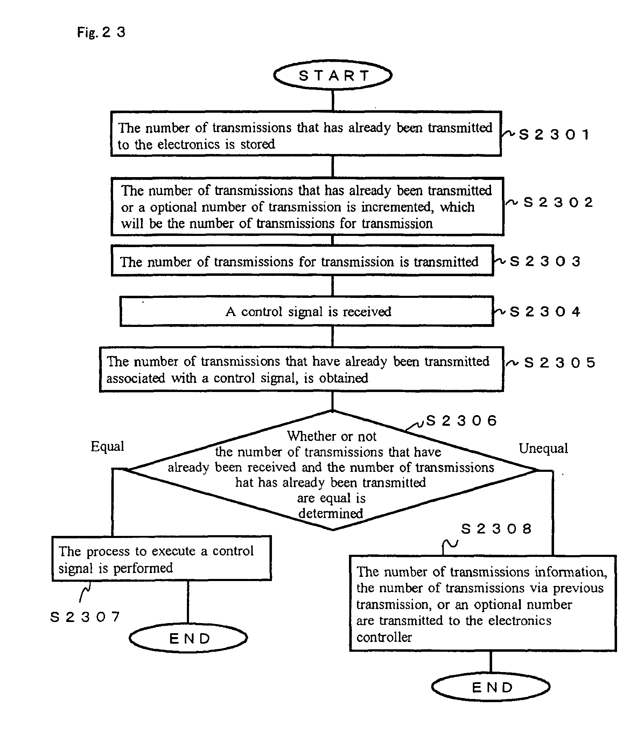

Fig. 23 is a flow chart of electronic devices to determine and update the number of transmissions.

In step 2301, a process to store the number of transmissions that have already been transmitted as the number of transmissions that is transmitted to the electronics controller is performed (step to store the number of transmissions that have already been transmitted).

In step 2302, an optional number of transmissions is obtained when the number of transmissions that have already been transmitted or is not stored. The number of transmissions is incremented, which will be the number of transmissions for transmission (increment step).

In step 2303, the number of transmissions for transmission is transmitted (step to transmit the number of transmissions for transmission).

In step 2304, a control signal associated with the number of transmissions is received (step to receive a control signal).

In step 2305, the number of transmissions that have already been received as the number of transmissions associated with the control signal received in the step to receive a control signal is obtained (step to obtain the number of transmissions that have already been received).

In step 2306, it is determined whether or not the number of transmissions that have already been received obtained in the step to obtain the number of transmissions that have already been received and the stored number of transmissions that have already been transmitted are equal (step to determine the numbers of transmissions).

In step 2307, when the result of the determination in the step to determine the number of transmissions is that the situation is equal, the process to execute a control signal associated with the number of transmissions that have already been received is performed (step of process for a control signal).

In step 2308, when the result of the determination in the step to determine the number of transmissions is that the situation is unequal, the unequal information showing that a result of determination is unequal, the number of transmissions that have been transmitted via the previous transmissions, or an optional number of transmissions are transmitted to the electronics controller (step to transmit the unequal information).

When a received control signal is associated with the number of transmissions for every received communication, the element to determine the number of transmissions 207 determines whether the number of transmissions associated with the received control signal and the number of transmissions associated with the control signal that have been received prior thereto are equal to each other. That is, the number of transmissions associated with the control signal decrypted at the element to decrypt a control signal 206 is obtained. Whether such number is equal to the number of transmissions associated with the received control signal that have been received prior thereto is determined. When such numbers are determined to be equal, a command that the control signal be decrypted by the element to decrypt a control signal 206 should be ignored is given to each element of the electronic devices.

When such numbers are not equal, there is a mode in which a process to control by a control signal is executed. On the other hand, there is the possibility for a process to control to be performed when equal. For example, there is a case where the electronic device determines the number of transmissions for the electronics controller to use. Since the electronics controller uses the number of transmissions received by the electronic devices, the authenticity of the electronics controller is determined based on whether the number of transmissions received by the electronic device and the number of transmissions transmitted to the electronics controller are equal. When equal, such controller can be determined to be authentic. In addition, the element to determine the number of transmissions 207 is not essential to the structure of the electronic devices.

Element 208 updates a common key stored at the element to store a common key for equipment 205 by a new common key obtained. That is to say, when the electronics controller 100 updates a common key, a new common key is encrypted and transmitted to the electronic devices. Therefore, the electronic device receives the element to obtain an encrypted common key at the element to obtain an encrypted common key 202, and decrypts such common key by a key stored at the element to store a common key for equipment 205, or the serial key stored at the element to store a serial key 203. Then, a new common key is obtained and such obtained common key is transmitted to the means for updating a common key 208. The means for updating a common key 208 updates the common key stored at the element to store a common key for equipment 205 into the new common key. In addition, the means for updating a common key 208 is not essential to the structure of the electronic devices.

Element 209 requests the transmission of a common key from the electronic device 100. That is, a request for transmission of a common key renewed by the electronics controller 100 is transmitted to the element to accept a request 112 of the electronics controller 100 when the electronic device 200 cannot communicate with the electronics controller 100 for some reason. Additionally, the element to request 209 is not essential to the structure of the electronic devices.

The electronic device 200 structured at such element do not comprise one product in its entirety, and can be implemented as a single module to be implemented by electronic circuits, as well. By installing such a module in electronic devices such as electronic home appliances, such electronic home appliances can be controlled by the electronics controller 100.

Initially, in order to make secure communication with the electronics controller, the electronic devices having the characteristics of passing the number of transmissions to the electronics controller using a common key is shown hereinafter, by adopting the electronic devices.

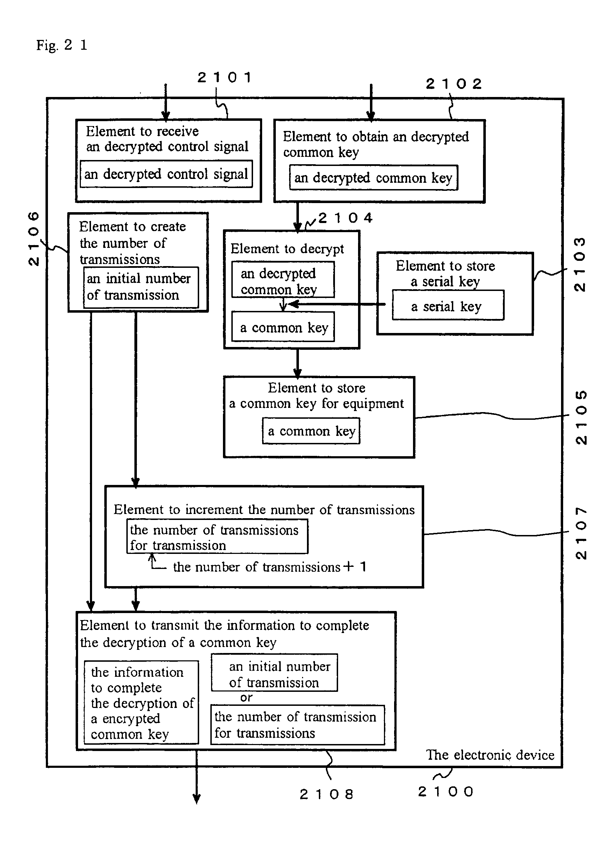

Fig. 21 is an example of a functional block diagram for the electronic device controlled by the electronics controller. The electronic device 2100 includes an element to receive an encrypted control signal 2101, an element to obtain an encrypted common key 2102, an element to store a serial key 2103, an element to decrypt 2104, an element to store a common key for equipment 2105, an element to create the number of transmissions 2106, an element to increment the number of transmissions 2107, and an element to transmit the information of completion of the decryption of a common key 2108.

The element to receive an encrypted control signal 2101 receives an encrypted control signal. A control signal is associated with the number of transmissions. Therefore, for example, after a control signal is decrypted by a common key stored by the element to store a common key for equipment 2105, the number of transmissions is obtained. This number of transmissions may be used at the element to increment the number of transmissions 2107.

The element to obtain an encrypted common key 2102 obtains an encrypted common key that is encrypted by a serial key uniquely identifying the electronic device.

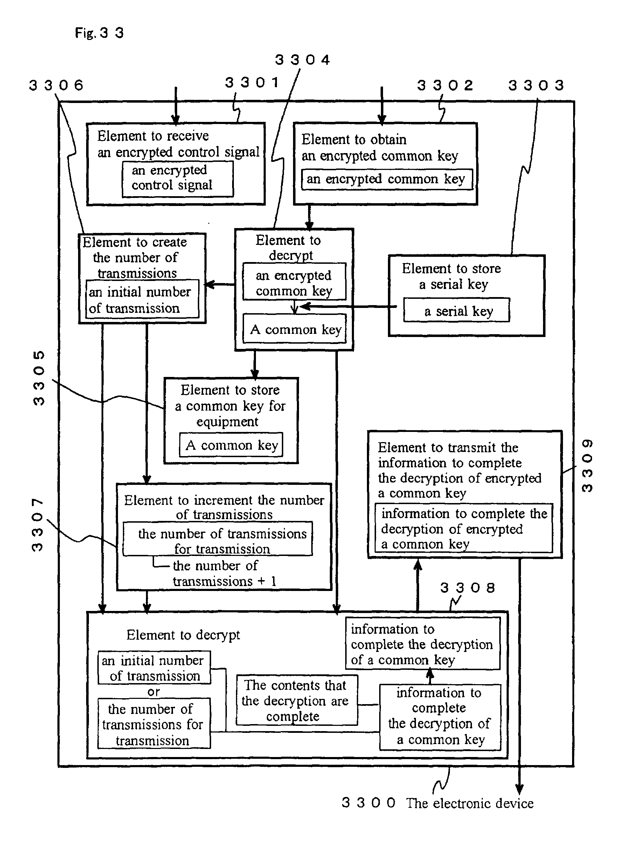

As shown in Fig. 33, an encrypted common key that is obtained may be structured to be passed to the encryption element. The encryption element encrypts the information of completion of the decryption of a common key mentioned hereinafter, using the obtained common key, so that secure communications for the electronic devices can be made.

Fig. 33 is an example of a functional block diagram for the electronic devices controlled by the electronics controller. The electronic devices 3300 includes an element to receive an encrypted control signal 3301, an element to obtain an encrypted common key 3302, an element to store a serial key 3303, a decryption element 3304, an element to store a common key for equipment 3305, an element to create the number of transmissions 3306, an element to increment the number of transmissions 3307, an encryption element 3308, and an element to transmit the information of completion of the decryption of an encrypted common key 3309.

Element 3303 stores a serial key in order to decrypt such encrypted common key and to make it a common key. The stored serial key is passed to the decryption element 3304, and is used when the process of decryption at the decryption element is made.

The decryption element 3304 decrypts an encrypted common key using a serial key and makes it a common key. The decrypted common key is passed to the element to store a common key for equipment 3305, and is used for encryption for the purpose of mutually secure communications between the electronic devices and the electronics controller.

Element 3305 stores a common key decrypted at the decryption element. The stored common key is used when the encrypted control signal received at the element to receive an encrypted control signal 3301 is decrypted, for example.

Element 3306 creates the number of transmissions when decryption of an encrypted common key is made at the decryption element. At the timing of acquiring a common key, the number of transmissions is created. The created number of transmissions is an initial number of transmissions, which is passed to the element to increment the number of transmissions 3307.

Element 3307 obtains an initial number of transmissions that is a created number of transmissions, and increments the number of transmissions as the number of transmissions. This number of transmissions is passed to the element to transmit the information of completion of the decryption of an encrypted common key 3309.

Element 3309 transmits the information, including that an encrypted common key has been made, at the decryption element, and either an initial number of transmissions or the number of transmissions. When notification is given to the electronics controller, encryption thereof may also be applied using a serial key or a common key.

As shown in Fig. 33, a common key acquiring the information of completion of the decryption of a common key is encrypted as the information of completion of the decryption of an encrypted common key, which may be transmitted to the electronics controller. Or, furthermore, the following may apply.

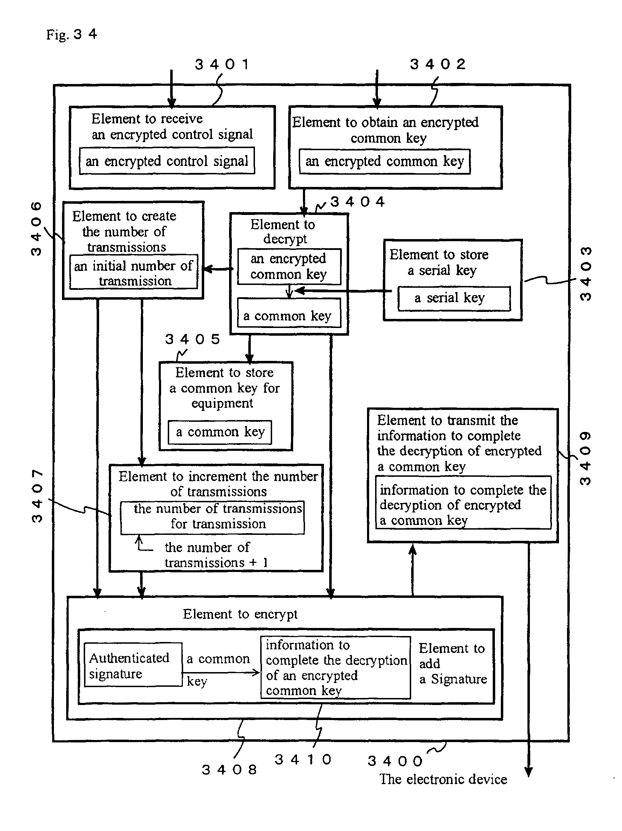

Fig. 34 is a further example of an element to add a signature at the encryption element of the electronic devices shown in Fig. 33.

Fig. 34 is a functional block diagram of an example of the electronic device controlled by the electronics controller. The electronic device 3400 includes an element to receive an encrypted control signal 3401, an element to obtain an encrypted common key 3402, an element to store a serial key 3403, a decryption element 3404, an element to store a common key for equipment 3405, an element to create the number of transmissions 3406, an element to increment the number of transmissions 3407, encryption element 3408, an element to transmit the information of completion of the decryption of an encrypted common key 3409, and a means to add a signature 3410.

Element 3410 performs the addition of an authenticated signature to the information of completion of the decryption of a common key using the acquired common key. It can detect falsification in the process of communication regarding the information of completion of the decryption of a common key transmitted to the electronics controller from the electronic devices.

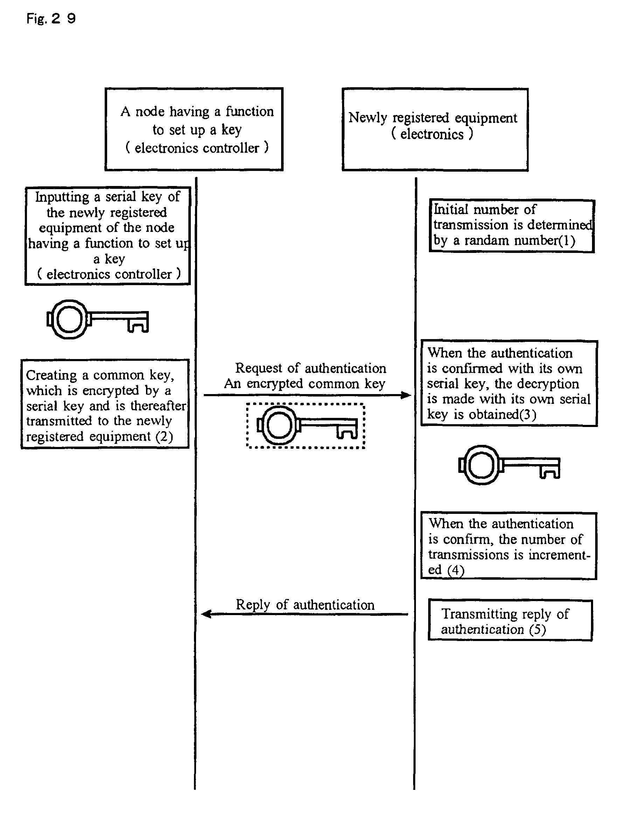

Fig. 29 shows a typical sequence of the above process. It shows a situation where the electronic devices manage and update the number of transmissions (sequence number).

Newly registered equipment determines an initial number of transmissions (sequence number) through a random number at the time of cold start (1). The node having a function to set up a key (electronics controller) creates a common key, which is encrypted by a serial key, and is transmitted to the newly registered equipment (electronic device) (2).

The newly registered equipment (electronic device) decrypts an encrypted common key received by the node having a function to set up a key (electronics controller) with its own serial key and performs decryption thereof. When the authentication is confirmed, the common key received from the node having a function to set up a key (electronics controller) with its own serial key is obtained (3).

When the authentication is confirmed, that is, a common key is,obtained, the newly registered equipment (electronic device) increments the number of transmissions, which is an initial number of transmissions determined by a random number (sequence number) (4). After this, it uses its own serial key, and transmits a reply of authentication to the node having a function to set up a key (electronics controller) (5).

The newly registered equipment (electronic device) transmits a reply of authentication at a time when authentication has failed.

In addition, when the node having a function to set up a key (electronics controller) receives a reply of authentication at a time when the authentication has failed, it creates an authenticated signature from the received number of transmissions (sequence number) and a common key or the like, and transmits it to the newly registered equipment (electronic device).

When a reply of authentication is not received, the node having a function to set up a key (electronics controller) retransmits to the newly registered equipment (electronic device) the number of transmissions (sequence number) that had been previously transmitted to the newly registered equipment (electronic device).

As already described above, either the electronics controller or electronic device can be the subject entity to perform management and updating of the number of transmissions (sequence number). The subject entity transmits the number of transmissions that is updated (sequence number) after completion of the process of control to the other party (non-subject entity). The non-subject entity determines whether the process is possible using the number of transmissions (sequence number) that is updated when the next process of control is performed. This matter has been explained in Figs. 19 and 20 explained above.

On the other hand, it is possible to determine whether the next process of control is possible, wherein the updated number of transmissions (sequence number) is not transmitted to a non-subject entity. The non-subject entity stores the number of transmissions (sequence number) that has been transmitted to the other party, which has previously transmitted a control signal thereto. When a control signal is received under the rule whereby such other party uses a different number of transmissions from the number of transmissions to which it has transmitted itself, and transmits the control signal, whether or not the numbers of transmissions that have been stored so far (sequence numbers) are equal is determined. When not matched, a new control signal is determined to be transmitted in an authenticated manner, and the process is executed.

In addition, as a method to determine whether a control signal is authenticated, there is a method where a subjective entity and non-subjective entity share a rule to determined the next authenticated number of transmissions based on common information such as the number of transmissions that has already been exchanged, in general. The number of transmissions is determined in accordance with the prescribed rule, and is added to the number of transmissions. Thus, it is convenient in that the number of transmissions to be used for the next time is not required to be exchanged.

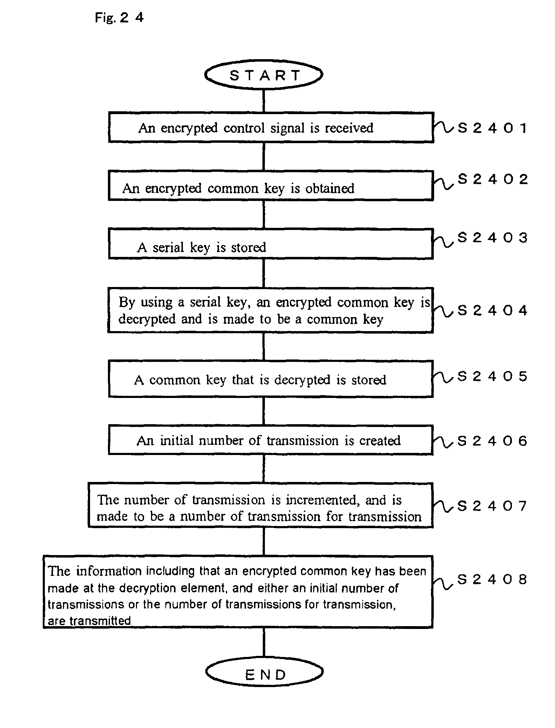

Fig. 24 is a flow chart of operation of the electronic device so as to make a secure communication between the electronic device and the electronics controller.

In step S2401, an encrypted control signal is received (step to receive an encrypted control signal).

In step S2402, an encrypted common key that is encrypted by a serial key identifying such electronic device uniquely is obtained (step to obtain an encrypted common key).

In step S2403, a serial key to decrypt such encrypted common key and make it a common key is obtained (step to obtain a serial key).

In step S2404, using the serial key in the step to obtain a serial key, the encrypted common key obtained in the step to obtain an encrypted common key is decrypted and is the common key (decryption step).

In step S2405, a common key that is decrypted in the step to decrypt is stored (step to store a common key for equipment).

In step S2406, when the decrypting of an encrypted common key is undertaken in the decryption step, the number of transmissions is created (step to transmit the number of transmissions).

In step S2407, an initial number of transmissions as a created number of transmissions is obtained. The number of transmissions is incremented, and is made to be the number of transmissions for transmission (increment step of the number of transmissions).

In step S2408, the information including that an encrypted common key has been made at the decryption element, and either an initial number of transmissions or the number of transmissions for transmission, are transmitted in the decryption step (step to transmit the information of completion of the decryption of a common key).

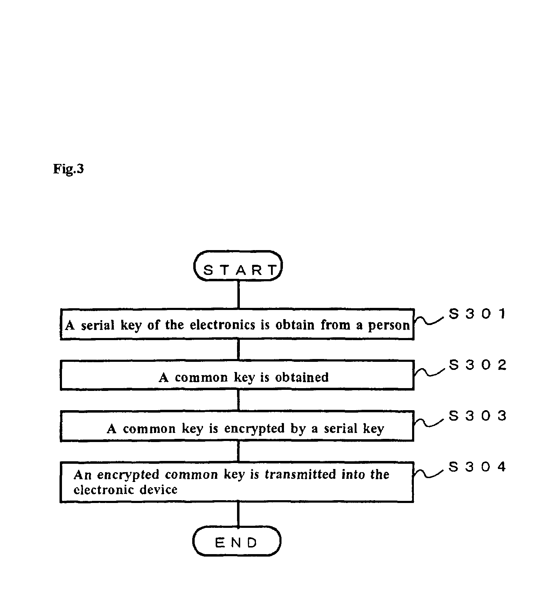

Fig. 3 is a flow chart of the electronics controller 100 when the electronic device controlled by the electronics controller 100 is added. To add an electronic device means to transmit a common key stored at the element to store a common key 103 of the electronics controller 100 to the electronic device, to have it store the common key, and to cause the electronics controller 100 to control the electronic device. In step S301, a serial key of the electronic device is obtained by a person who establishes a serial key using an element to obtain a serial key 102. A person who establishes a serial key means an operator of the electronics controller intending to add the electronic device, and who inputs a serial key of the electronic device into the electronics controller 100 using a numeric keypad, a barcode reader, an RF tag, or the like, as described above. Additionally, then, in order to confirm a person who sets up a serial key, a request for inputting a password and an individual identification number may be executed, or identification may be performed by an IC card. In step 302, a common key is obtained by the element to store a common key 103. In step S303, a common key is encrypted by a serial key. This encryption is executed at the element to encrypt a common key 104. In step S304, the encrypted common key of step S303 is transmitted to the added electronic device by the element to transmit an encrypted common key 106.

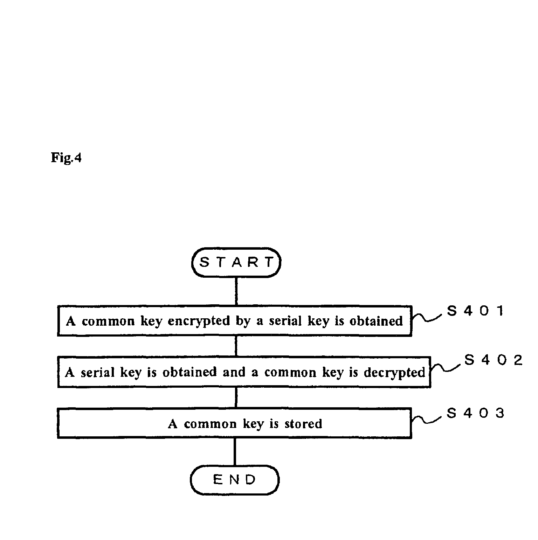

Fig. 4 is a flow chart of the electronic device 200, which will be added. In step S401, an encrypted common key at the element to obtain an encrypted common key 202 by a serial key (an encrypted common key) is obtained. In step 5402, a serial key stored at the element to store a serial key 203 is obtained, the encrypted common key obtained in step S401 is decrypted, and a common key is obtained. In the step S403, the obtained common key is stored at the element to store a common key for equipment 205.

Herewith, a common key that is encrypted is transmitted to the added electronic device, and the common key can be stored at the added electronic device. A person with malicious intent will not be able to know the common key.

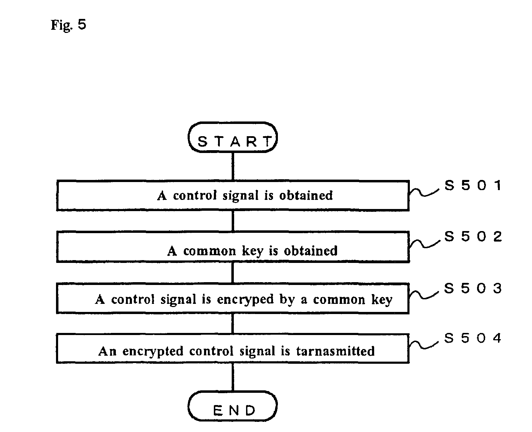

Fig. 5 is a flow chart for the electronics controller 100 to transmit a control signal to the electronic device 200. In step S501, a control signal is obtained by element 101. In step S502, a common key is obtained from the element to store a common key 103. In step S503, the control signal is encrypted by a common key by element 105. In step S504, an encrypted control signal is transmitted to the electronic device 200 by element 107.

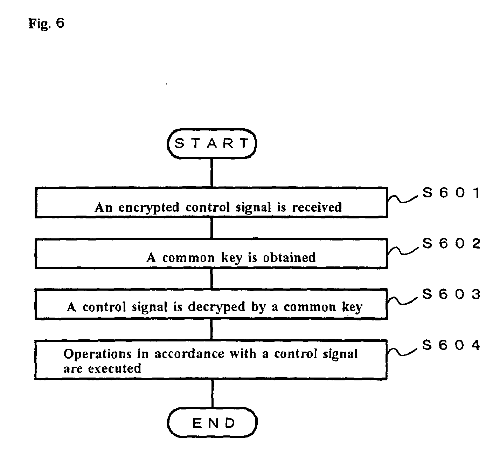

Fig. 6 is a flow chart of the electronic device when a control signal is transmitted from the electronics controller 100. In step S601, an encrypted control signal is received by element 201. In step S602, a common key stored at the element to store a common key for equipment 205 is obtained. In step S603, an encrypted control signal is decrypted by a common key, and a control signal is obtained. In step S604, operations in accordance with a given control signal are executed.

Herewith, communication of the control signal between the electronics controller 100 and the electronic device 200 can be executed using a common key.

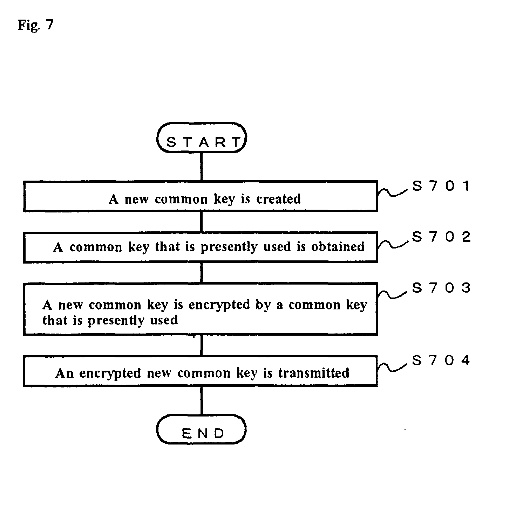

Fig. 7 is a flow chart of the process whereby the electronics controller 100 updates a common key. In step S701, a new common key is created by the means to update a common key 108. In step S702, a common key in the element to store a common key 103, that is, a common key that has already been encrypted and transmitted to the electronic device 200 is obtained. This common key that has already been encrypted and transmitted to the electronic device 200 is called "a common key that is presently used." In step S703, a new common key is encrypted by a common key that is presently used, by the means to encrypt the second encryption key 110. In step S704, an encrypted new common key is transmitted to the electronic device by the element to transmit an encrypted common key 106. Additionally, a serial key of the electronic device to which an encrypted new common key is transmitted and a new common key is associated, which will be registered at the element to register the electronic devices 109.

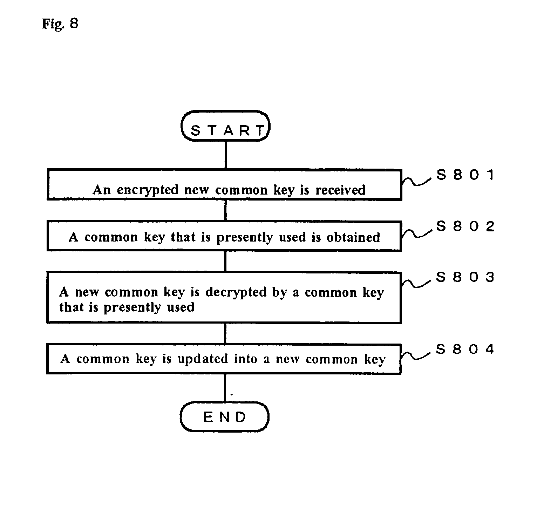

Fig. 8 is a flow chart of the process of the electronic device 200 when a common key is updated. In step S801, a new common key that is encrypted by a common key that is presently used is obtained. In step S802, a common key that is presently used stored at the element to store a common key for equipment 205 is obtained. In step S803, an encrypted new common key obtained in step S801 by a common key that is presently used is decrypted. In step S804, updating a common key to the decrypted new common key in step S803 is executed by the means of updating a common key 208.

Herewith, a common key can be updated, which can prevent a copy attack.

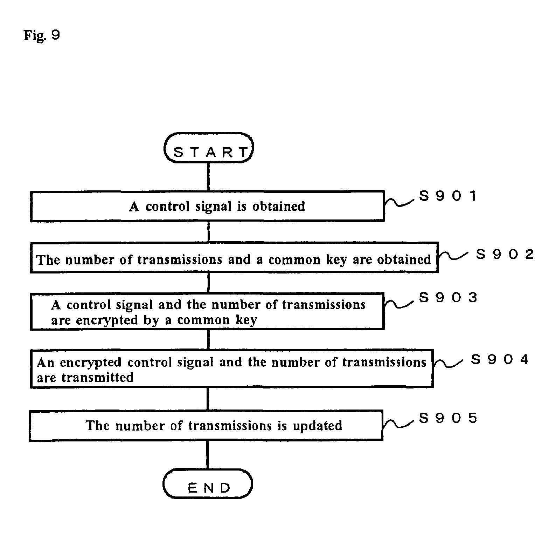

Fig. 9 is a flow chart of transmitting a control signal with which a different number of transmissions is associated, and which is encrypted by the electronics controller 100, so as to further prevent a copy attack. In the step S901, a control signal is obtained by the element to obtain a control signal 101. In step S902, the number of transmissions is obtained from the element to give the number of transmissions 111, and a common key is obtained from the element to store a common key 103. In step S903, a control signal and the number of transmissions are associated, and are encrypted by a common key. For example, a control signal and the number of transmissions are connected, which will comprise a new control signal. This is encrypted by a common key, and obtaining an encrypted control signal is executed at the element to encrypt a control signal. 105. An encrypted control signal obtained as such is called an encrypted control signal associated with the number of transmissions. In step S904, an encrypted control signal is transmitted by the element to transmit an encrypted control signal 107. In step S905, the number of transmissions is updated so that a different number of transmissions can be obtained by the element to give the number of transmissions 111.

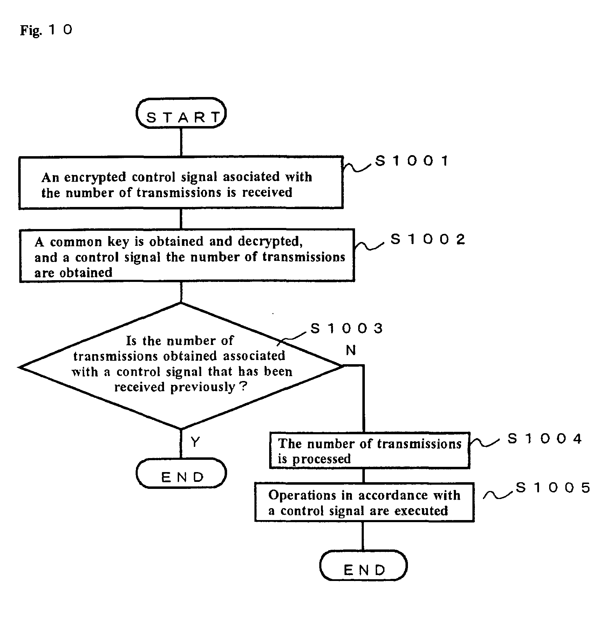

Fig. 10 is a flow chart of the process of the electronic device 200 when an encrypted control signal associated with the number of transmissions is received. In step S1001, an encrypted control signal associated with the number of transmissions is received at the element to receive an encrypted control signal 201. In step S1002, a common key is obtained from the element to store a common key for equipment 205. The decrypting of an encrypted control signal is executed at the element to decrypt a control signal 206. A control signal and the number of transmissions associated with an encrypted control signal are obtained. In step S1003, whether the number of transmissions is associated with a control signal that has been received previously is determined. If the number of transmissions is matched with the one associated with a control signal that has been received previously, this is determined to have been transmitted as a copy attack, and such control signal is ignored. If not, the process proceeds to step S1004. In step S1004, the number of transmissions is processed. Specifically, in order to determine whether the number of transmissions is the one associated with a control signal that has been previously received, the number of transmissions is stored. In step 1005, operations in accordance with a control signal are executed.

In addition, there are several methods for obtaining the number of transmissions at the element to give the number of transmissions 111, and a method to determine whether the number of transmissions in step S1003 is associated with a control signal that has been previously received. For example, there is a method to obtain a number that is simply increasing from the element to give the number of transmissions 111. In this method, the element to give the number of transmissions 111 stores the number of transmissions that will be obtained next. When the process of step S905 is executed, a number to be obtained by adding a positive number to the stored number of transmissions is stored. Additionally, the electronic device 200 stores all of the numbers of transmissions associated with the received encrypted control signal, and determines whether such numbers are matched with the number of transmissions associated with the received encrypted control signal. Alternatively, the electronic device 200 stores the only numbers of transmissions associated with the received encrypted control signal immediately prior thereto, and determines whether the numbers of transmissions associated with the received encrypted control signal are the same or smaller than the stored numbers of transmissions. If they are the same or smaller, the numbers of transmissions are deemed to be matched with the numbers of transmissions associated with the encrypted control signal that has been previously received, and such numbers are ignored. If larger, the number of transmissions is stored, and operations corresponding to the control signal are executed.

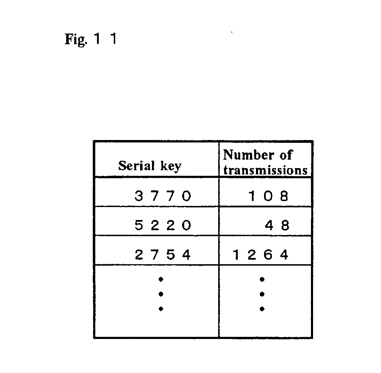

Additionally, as another method, the electronic device 200 store the number of transmissions associated with the received encrypted control signal next. That is to say, in step S1004, the number of transmissions associated with the received encrypted control signal for the following time is created and stored, and the stored number of transmissions and the serial key of the electronic device 200 are transmitted to the electronics controller 100. In this method, the electronics controller 100 manages a table responding to the serial key and the number of transmissions of the electronic devices shown in Fig. 11. Due to the execution of step S1004, the number of transmissions transmitted from the electronic device is received in step S905. The number of transmissions responding to the serial key of the electronic devices that have transmitted the number of transmissions is updated. In step S901, the number of transmissions is obtained from the serial key of the electronic device to which a control signal is transmitted from the table of Fig. 11. The electronic device 200 determines whether the number of transmissions associated with the received encrypted control signal is equal to the stored number of transmissions. If it is equal thereto, such number is determined not to be the number of the encrypted control signal that has been received previously. If not, such number is determined to be the number of the encrypted control signal that has been received previously.

Due to executing the above operations at the electronics controller 100 and the electronic device 200, a copy attack can be prevented.

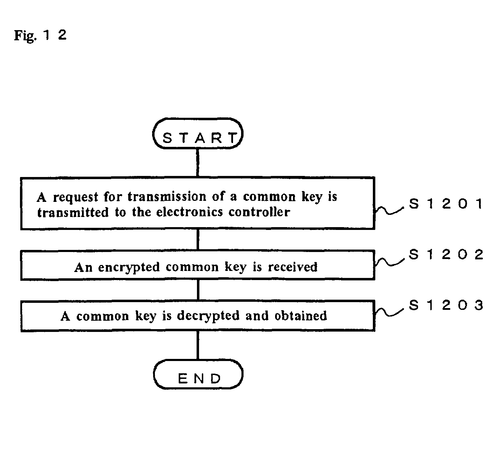

Fig. 12 is a flow chart of the process for the electronic devices to request and obtain a common key when the electronics controller has updated a common key, while the electronic device could not communicate with the electronics controller. In step S1201, a request for transmission of a common key is transmitted to the electronics controller 100 using the element to request 209. In step S1202, an encrypted common key that has been transmitted, responding to a request transmitted in step S1201, is received. In step S1203, a common key is decrypted and obtained.

The electronics controller updates a common key for a certain periodic cycle. When the communication cannot be made between the electronic devices and the electronics controller, a common key cannot be updated, and the electronic devices requests a transmission of a common key later. This request for transmission is performed at the time when the main power is on.

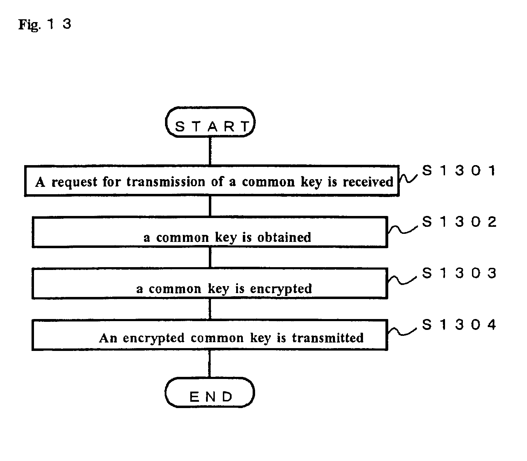

Fig. 13 is a flow chart of the process of the electronics controller when the process in Fig. 12 is executed by the electronic device 200. In step S1301, a request for transmission of a common key from electronic device 200 is received by the element to accept a request 112. In step S1302, a common key stored at the element to store a common key 103 is obtained. In step S1303, a common key is encrypted by the element to encrypt a common key 104. In step S1304, an encrypted common key is transmitted by the element to transmit an encrypted common key 106.

Additionally, if a request for transmission of a common key from the electronic device 200 is unconditionally processed, a person with malicious intent can easily obtain a common key. Therefore, when the electronics controller 100 receives a request for transmission of a common key, the electronics controller 100 checks if the request has been transmitted from the electronic device. When a serial key is transmitted from electronic device where a serial key has not been obtained from the element 102, such request may be ignored.

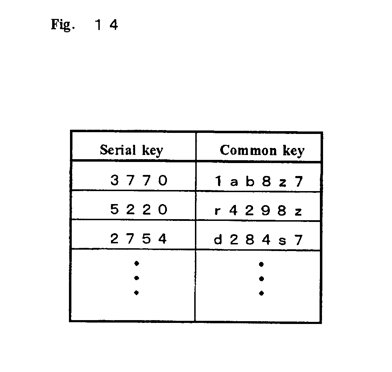

Additionally, there is a method to use a serial key of the electronic device that dispatches a request for transmission of a common key, as a key for encryption step S1303 and the decryption step S1203. As for other methods, it is possible for the electronics controller 100 to manage a common key stored by the registered electronic devices. For instance, what serial key the electronic devices have and what common key such electronic devices have should be recorded in a table as shown in Fig. 14. When a common key is transmitted to the electronic devices, the electronic devices reply to the electronics controller 100 that the common key has been updated. The electronics controller 100 associates the serial key of the electronic devices that have given the reply thereto with the transmitted common key, which will be stored in the table of Fig. 14. In step S1303, when a common key is encrypted, a request is pursued for transmission of a common key that has been issued according to which serial key the electronic devices have, and a common key stored by the electronic device is obtained by the table in Fig. 14 and encrypted.

Due to such process, even if the electronics controller updates a common key, while the electronic devices cannot communicate therewith, the electronic devices can obtain a common key after the update. Furthermore, a common key is encrypted and is transmitted to the electronic devices. Therefore, a person with malicious intent cannot know such a common key.

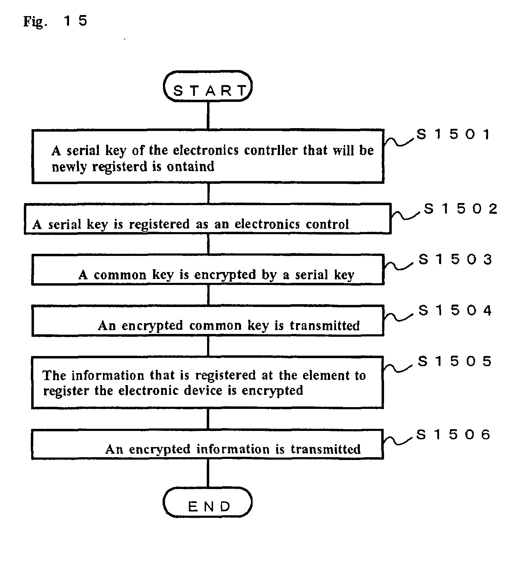

Fig. 15 is a flow chart of the process when the registered electronic device at the electronics controller 100 is a separate electronics controller. Since the electronics controller is a type of electronic device, such controller is specified by a serial key uniquely. Therefore, in step 1501, a serial key of the electronics controller, which will be newly registered by the element to obtain a serial key 102, is obtained. In step S1502, a serial key obtained is registered at the means to register a controller 113 as a serial key of the electronic device. For instance, if there is a table to store a serial key of the electronics controller registered at the electronics controller 100, a serial key is registered at the table, and a mark showing the electronics controller is placed thereon. In step S1503, a common key stored at the element to store a common key 103 is obtained, which will be encrypted by a serial key of the electronics controller that will be registered. In step S1504, an encrypted common key is transmitted to the electronics controller that will be registered by the element to transmit an encrypted common key 106. In step S1505, the information that is registered at the element to register the electronic device 109 is encrypted by the means to encrypt the information of the element to register the electronic device 114. The information registered at the element to register the electronic device 109 means a serial key of the electronic device registered at the electronics controller 100, or the contents of the table when the electronics controller 100 manages a table shown in Figs. 11 and 14. Additionally, a key to encrypt by the means to encrypt the information of the element to register the electronic device 114 is a serial key or common key of the electronics controller that will be registered.

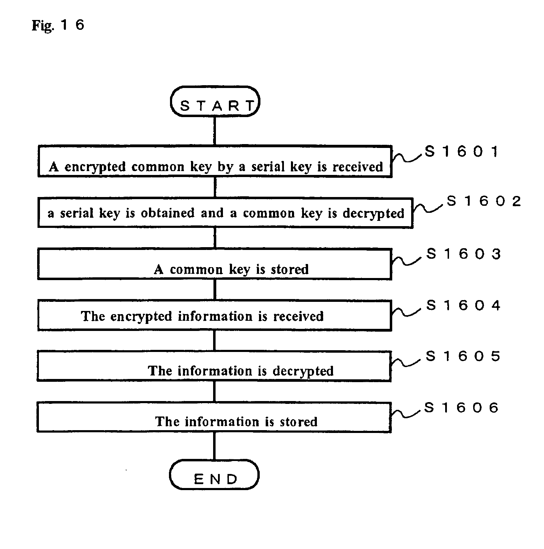

Fig. 16 is a flow chart of the process of the electronics controller that will be registered. In step S1601, an encrypted common key that is transmitted in S1504 is received. The received common key is encrypted by a serial key in step S1503. Therefore, such common key is decrypted by obtaining its own serial key in step S1602. In step S1603, a common key is stored. In step S1604, the encrypted information that is transmitted in step S1506 is received. In step S1605, the received information is decrypted. In step S1505, when encryption is made using a serial key, the information is decrypted using its own serial key. In the step S1505, when encryption is made using a common key, a common key stored in step S1603 is used and decrypted. In the step S1606, the decrypted information is stored.

Additionally, when the process of Fig. 16 is executed prior to the process of Fig. 15, the electronics controller 100 itself is a "master electronics controller." When the process of Fig. 15 is executed prior to the process of Fig. 16, the electronics controller 100 itself is a "slave electronics controller." It is possible that such details can be stored by the electronics controller 100. And when the only master electronics controller updates a common key, even if multiple electronics controllers exist, only one common key exists in entirety. Furthermore, while the master electronics controller cannot communicate with the slave electronics controller, such as when the power of the master electronics controller is off, when a serial key of the electronics is input into the slave electronics controller and is controlled, a serial key input while the power is off to the slave electronics controller is requested, and obtained. Thereby, the master electronics controller can always grasp all electronics to which a common key should be transmitted when it is updated. This allows the master- and the slave- electronics controllers to undertake cooperative operations.

Updating a common key is possible even if there are multiple electronics controllers by registering a separate electronics controller in the electronics controller as a child electronics controller. The registered information can be shared between the electronics controllers. Therefore, multiple electronics controllers can have cooperative operations.

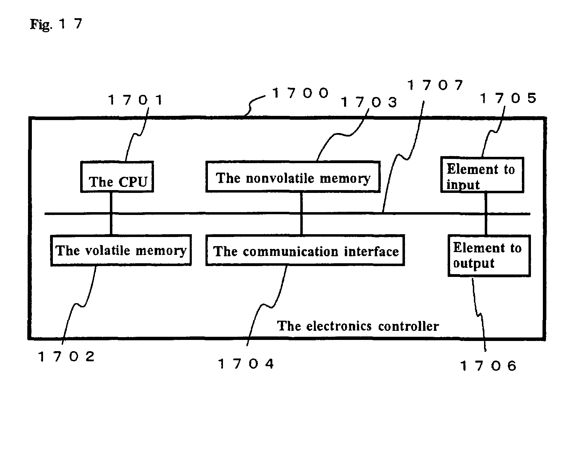

In addition, the structure of computer as shown in Fig. 17 can be adopted as a physical structure of the electronics controller 100. That is to say, it is composed of a CPU 1701, a volatile memory 1702, a nonvolatile memory 1703, a communication interface 1704, an input element 1705, and an output element 1706. These are mutually connected via a bus 1707. CPU 1701 executes a program stored at the nonvolatile memory 1703, and the volatile memory 1702 is used as a working area at the time of such execution. In addition to storing the programs, the nonvolatile memory 1703 stores the information that must be stored even if the power is off, such as a common key stored at the element to store a common key 103, the information registered at the element to register the electronic device 109. The communication interface communicates with the electronic devices. The input element 1705 and the output element 1706 are interfaces for an operator of the electronics controller. For example, these are composed of buttons, liquid crystal panels, and the like. A control signal to read a command from an operator is created. Condition of the electronics controller is displayed for the operator. Additionally, the element to input 1705 comprises a numeric keypad to input a serial key, and a barcode reader.

The programs stored in the nonvolatile memory 1703 execute a step to obtain a serial key, a step to obtain a common key, a step to encrypt a common key, and a step to transmit the encrypted common key, in order to cause the CPU 1701, volatile memory 1702, nonvolatile memory 1703, communication interface 1704, input element 1705, and output element 1706 to execute the process to operate the electronics controller. Additionally, they execute a step to obtain a control signal, a step to encrypt a control signal, and a step transmit the encrypted control signal.

The step to obtain a serial key is a step to perform a process to obtain a serial key identifying the electronic device uniquely. Obtaining a serial key can be performed by reading a serial key input at the element to input 1705, for example. This step is step 301 in Fig. 3, for instance.

The step to obtain a common key, such as step 302 in Fig. 3, obtains a common key to encrypt a control signal. A common key is obtained by the nonvolatile memory 1703.

The step to encrypt a common key, such as step 303 in Fig. 3, encrypts a common key obtained in step to obtain a common key using a serial key obtained in the step to obtain a serial key, which is made to be an encrypted common key.

The step to transmit an encrypted common key, such as step 304 in Fig. 3, transmits the encrypted common key obtained by the step to encrypt a common key. Transmission is performed for the electronic device by the communication interface 1704.

The steps are executed in accordance with the flow chart shown in Fig. 3. Due to the programs of the electronic devices that execute a step to obtain an encrypted common key, a step to obtain a serial key, a step to decrypt, and a step to store a common key for equipment, as shown in Fig. 4, a common key can be shared between the electronics controller and the electronic devices. Furthermore, a person with malicious intent cannot know such common key.

The step to obtain a control signal is shown by step S501 in Fig. 5, for instance. Obtaining a control signal is performed by reading a control signal that has occurred through the operations by the operator of the element to input 1705. Additionally, a signal transmitted via a wireless means such as an infrared signal or electromagnetic waves by remote control, or via wired means using a cable, is read through the communication interface 1704 and is performed.

The step to encrypt a control signal, such as steps S502 and S503 in Fig. 5, encrypts a control signal using a common key obtained in step to obtain a common key.

The step to transmit an encrypted control signal, such as step 504 in Fig. 5, transmits an encrypted control signal obtained by the step to encrypt a control signal. Transmission is performed for the electronic devices by the communication interface 1704.

Through executing such steps in accordance with the flow chart of Fig. 5, a control signal can be encrypted and transmitted from the electronics controller 1700 to the electronic devices.

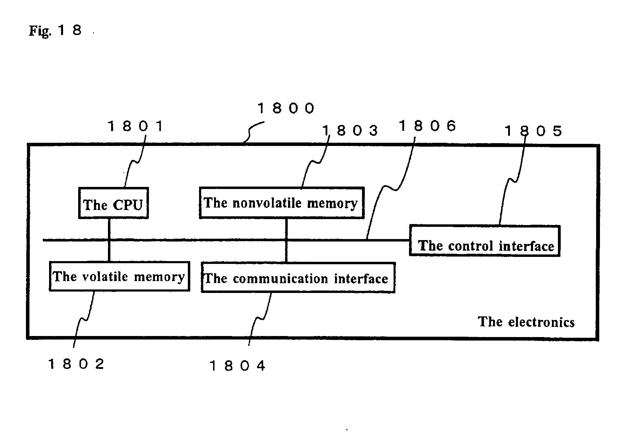

Additionally, as a physical structure of the electronic devices 200, the structure of the computer shown in Fig. 18 can be adopted. In this structure, the electronic devices 200 include a CPU 1801, a volatile memory 1802, a nonvolatile memory 1803, a communication interface 1804, and a control interface 1805. These are mutually connected via a bus 1806.

The programs relating to the present invention for the electronic device where the encrypted and transmitted control signal via communication is received and controlled are stored in the nonvolatile memory 1803. Such programs are executed in the CPU 1801. Additionally, a serial key and common key of the electronic devices are stored in the nonvolatile memory. The volatile memory 1802 is a working area when a program is executed in the CPU 1801. The communication interface 1804 executes communication with the electronics controller 100. The control interface inputs and outputs a signal to control other hardware. Thus, the electronic device 1800 having the structure shown in Fig. 18 can provide a module that structures products such as home electronic appliances.

The programs relating to the present invention stored in the nonvolatile memory 1803 execute a step to obtain a serial key, decryption step, and a step to store a common key for equipment, at the CPU 1801, the volatile memory 1802, the nonvolatile memory 1803, the communication interface 1804, and the control interface 1805, which are mutually connected. Additionally, a step to receive an encrypted control signal and a step to decrypt a control signal are executed.

A step to obtain an encrypted common key, such as step S401 in Fig. 4, obtains an encrypted common key that is encrypted by a serial key identifying the electronic device uniquely. This is, it is the process to receive an encrypted common key by the electronics controller via the communication interface 1804.

The step to obtain a serial key, such as the first part of step S402 in Fig. 4, decrypts the encrypted common key obtained by step to obtain the encrypted common key, and to obtain a serial key to make it a common key. This is to say, it is the step to obtain a serial key of the electronic devices stored at the nonvolatile memory 1803.

The decryption step, such as the second half of step S402 in Fig. 4, decrypts the encrypted common key using a serial key, and to make it a common key. This is, it is the process to decrypt the encrypted common key that is received by the step to obtain an encrypted common key by a serial key obtained by the step to obtain a serial key.

The step to store a common key for equipment, such as step 403 in Fig. 4, stores the decrypted common key by the step to decrypt. This is to say, it is the process to store the decrypted common key that is decrypted by the step to decrypt in the nonvolatile memory 1803.

Through executing such steps, a common key can be shared between the electronics controller and the electronic device mentioned above, without allowing a person with malicious intent to know it.

A step to receive an encrypted control signal uses a common key transmitted from the electronics controller via the communication interface 1804.

The step to decrypt a control signal decrypts an encrypted control signal that is transmitted through communication using a common key stored in the step to store a common key for equipment. This is, it is the process to decrypt a control signal received in step to receive an encrypted signal by a common key stored in the nonvolatile memory 1803, based on the step to store a common key for equipment.

Through executing such steps, a control signal that is encrypted and transmitted from the electronics controller can be received and decrypted.

As described above, according to the present invention, first, a common key is encrypted using a serial key of the electronic devices that will be registered, and transmitted to the electronic devices. This allows communication using a common key to be made, without allowing a person with malicious intent to know the common key.

Second, by encrypting a new common key by the present common key and transmitting such key to the electronic devices, the common key can be updated. Thus, a copy attack is difficult to implement, which prevents a person with malicious intent from knowing a common key when a common key is updated.

Third, a control signal transmitted from the electronics controller is associated with a different number of transmissions, which can prevent a copy attack.

Fourth, the electronics controller processes a request for transmission of a common key from the electronic devices, which can obtain a common key that has been updated while the electronic devices cannot communicate. Additionally, since a common key is encrypted and transmitted to the electronic devices, a person with malicious intent cannot know a common key.

Fifth, when the electronic devices that will be registered at the electronics controller is a separate electronics controller, sharing the information is possible by transmitting the information of the electronic devices that is registered at the separate electronics controller. Thus, multiple electronics controllers can make cooperative operations.

## Claims

1. An electronics controller to transmit a control signal via communication to electronic device including;
an element to obtain a control signal;
an element to obtain a serial key identifying electronic devices uniquely;
an element to store a common key to encrypt a control signal;
an element to encrypt a common key wherein a common key stored at the element to store a common key is encrypted as an encrypted common key using a serial key obtained at the element to obtain a serial key;
an element to encrypt a control signal wherein a control signal is encrypted and is made to be an encrypted control signal using a common key stored at said element to store a common key;
an element to transmit an encrypted common key at said element to encrypt a common key; and
an element to transmit an encrypted control signal encrypted at said element to encrypt a control signal.

2. The electronics controller according to claim 1 wherein said element to store a common key comprises a means of updating a common key to create a new common key different from a common key which has been already encrypted and transmitted, and an element to register an electronic device to store a new common key associated with a serial key of an electronic device to which said common key has been transmitted.

3. The electronics controller according to claim 1 wherein the element to encrypt a common key further comprises a second means to encrypt a new common key, which includes an element for updating a common key, by a common key that has been already encrypted and transmitted.

4. The electronics controller according to claim 1 further comprising an element to give a number of transmissions to associate a different number of transmissions with every transmission of a control signal.

5. The electronics controller according to claim 1 further comprising an element to accept a request for transmission of a common key to an electronic device.

6. The electronics controller according to claim 2,
wherein the element to register an electronic device further comprises a means to register a controller to register an electronic device as an electronics controller according to claim 1, comprising:
a means to encrypt information of the element to register an electronic device to encrypt the information registered in the element to register an electronic device by the serial key of an electronics controller, which is an electronic device, for the electronics controller registered by the means to register an electronic device; and
an element to make a transmission to a controller to transmit the information encrypted by the means to encrypt information of the element to register an electronic device to said electronics controller registered.

7. An electronic device receiving an encrypted control signal encrypted and transmitted via communication by an electronics controller, comprising:
an element to receive an encrypted control signal to receive an encrypted control signal;
an element to obtain an encrypted common key to obtain an encrypted common key that is encrypted by a serial key identifying the electronic device uniquely;
an element to store a serial key as a common key for decrypting the encrypted common key;
an element to decrypt an encrypted common key using a serial key and to make it a common key;
an element to store a common key that is decrypted by the element to decrypt; and
an element to decrypt an encrypted control signal transmitted via communication using a common key of the element to store a common key.

8. The electronic device according to claim 7 wherein a control signal received is associated with a number of transmissions for every reception, comprising an element to determine whether a number of transmissions associated with a control signal that is received and a number of transmissions associated with a control signal that has been received prior thereto are equal, and said electronic device is not controlled by a control signal received when a result of judgment at the element to determine a number of transmissions is "unequal".

9. The electronic device according to claim 7 comprising an element to request a transmission of a common key to an electronics controller.

10. The electronic devices according to claim 7 wherein said element to store a common key includes a means to update a stored common key by an obtained new common.

11. An electronics controller program for transmitting a control signal via communication to an electronic device, for causing a computer to execute including the steps of:
a step to obtain a control signal;
a step to obtain a serial key identifying an electronic device uniquely;
a step to obtain a common key in order to encrypt a control signal;
a step to encrypt a common key wherein a serial key obtained at the step to obtain a serial key is used to encrypt a common key obtained at the step to obtain a common and the result of the encryption is made to be an encrypted common key;
a step to encrypt a control signal wherein a common key obtained at the step to obtain a common key is used to encrypt a control signal and the result of the encryption is made to be an encrypted control signal;
a step to transmit an encrypted common key that is encrypted at the step to encrypt a common key; and
a step to transmit an encrypted control signal that is encrypted at the step to encrypt a control signal.

12. A program for an electronic device that receives an encrypted transmitted control signal via communication and which is controlled thereby and for causing a computer to execute the following steps:
a step to receive an encrypted control signal;
a step to obtain an encrypted common key encrypted by a serial key identifying said electronic device uniquely;
a step to obtain a serial key wherein said encrypted common key is decrypted and is made to be a common key;
a step to decrypt wherein a serial key is used to decrypt an encrypted common key and the result of the decryption is made to be a common key;
an element to store a common key decrypted at the step to decrypt; and
a step to decrypt an encrypted control signal transmitted via communication using a common key stored at the step to store a common key.

13. A method of initial establishment of a common key to enable the common key to encrypt the communication with an electronic device to be used by the electronic device comprising a step to input a serial key unique to an electronic device into a node having a function to set up a key which performs communications with an electronic device, a step to encrypt the common key by the serial key, and a step to transmit from said node having a function to set up a key to the electronic device.

14. A method for sharing a common key with an electronic device in order to encrypt the communication between the electronic device and an electronics controller comprising the steps of:
a step to input a serial key uniquely determined for every electronic device to the electronics controller;
a step to encrypt a common key of the electronics controller using a serial key input at the step to input a serial key; and
a step to transmit a common key encrypted at the step to encrypt a common key to the electronic device.

15. A method for updating a common key for encrypting communication with an electronic device wherein a node having function to set up a key encrypts a new common key by a current common key shared between an electronic device and the node having a function to set up a key, and transmits to the electronic device.

16. A method for updating a common key in order to encrypt communication with an electronic device and an electronics controller, comprising the steps:
a step to encrypt a common key for updating wherein a common key for updating as a new common key is encrypted by a common key that has been already shared with the electronics controller and the electronic device, at the electronics controller; and
a step to transmit a common key for encrypting and updating to transmit an encrypted common key for updating at said step to encrypt a common key for updating into the electronic device.

17. An electronics controller to transmit a control signal via communication to an electronic device, comprising an element to give a secure header to a signal transmitted to the electronic device, wherein the secure header contains a sequence number field that contains sequence number information that indicates a different sequence number for every transmission of a control signal.

18. A method for transmitting a control signal via communication to the electronic device, comprising the steps of:
a step to obtain a control signal to be transmitted;
a step to obtain information of a sequence number as the information showing a different sequence number for every transmission of a control signal; and
a step to give a secure header including information of a sequence number obtained at said step to obtain information of a sequence number to a control signal obtained at said step to obtain a control signal.

19. An electronics controller, comprising
an element to receive a number of transmissions from an electronic device,
an element to store a number of transmissions for identifying control wherein a number of transmissions received at an element to receive a number of transmissions is stored as a number of transmissions for identifying control,
an element to obtain a control signal,
an element to give a number of transmissions to associate a number of transmissions for identifying control or an optional number of transmissions optionally created when an element to store a number of transmissions for identifying control does not store a number of transmissions for identifying control with every transmission of a control signal obtained at said element to obtain a control signal, and
an element to transmit to an electronic device a control signal obtained at an element to obtain a control signal by associating with a number of transmissions associated by an element to give a number of transmissions.

20. A method for operating an electronics controller, comprising the steps of:
a step to receive a number of transmissions from an electronic device;
a step to store a number of transmissions for identifying control to store a number of transmissions received at a step to receive a number of transmissions as a number of transmissions for identifying control;
a step to obtain a control signal;
a step to give a number of transmissions to associate a number of transmissions for identifying control or a number of transmissions created when a number of transmissions for identifying control is not stored with every transmission of a control signal obtained at a step to obtain a control signal; and
a step to transmit a control signal to transmit to the electronic devices a control signal obtained at said step to obtain a control signal, with a number of transmissions associated at a step to give a number of transmissions.

21. An electronic device controllable by an electronics controller, comprising:
an element to obtain a control signal to be transmitted to other electronic devices or the electronics controller; and
an element to give a number of transmissions associating a different number of transmissions for every transmission of a control signal obtained at said element to obtain a control signal.

22. A method for transmitting a control signal to an electronics controller by an electronic device, comprising the steps of:
a step to obtain a control signal to be transmitted;
a step to obtain information about a number of transmission as transmission number information indicating a different number of transmissions for every transmission of a control signal; and
a step to give a number of transmissions associating information about a number of transmissions obtained at a step to obtain information about a number of transmissions with a control signal obtained at said step to obtain a control signal.

23. An electronic device for transmitting a control signal to an electronics controller, comprising an element to give a secure header to a signal to transmit to the electronics controller, wherein a secure header contains a sequence number field that includes sequence number information indicating a different sequence number for every transmission of a control signal.

24. A method for transmitting a control signal via communication to an electronics controller, comprising the steps of:
a step to obtain a control signal to be transmitted;
a step to obtain information about a sequence number as sequence number information indicating a different sequence number for every transmission of a control signal; and
a step to give a secure header that contains a sequence number information obtained at a step to obtain information about a sequence number regarding a control signal obtained at said step to obtain a control signal.

25. An electronic device, comprising
an element to store a number of transmissions transmitted to the electronic device,
an element to increment the number of transmissions to obtain a number of transmissions transmitted from said element to store a number of transmissions, or to obtain a number of transmissions when a number of transmissions transmitted is not stored at said element to store the number of transmissions, and to increment a number of transmissions making the result a number of transmissions for transmission,
an element to transmit a number of transmissions for transmission,
an element to receive a control signal associated with a number of transmissions,
an element to obtain a received number of transmissions that has already been received as a number of transmissions associated with a received control signal at said element to receive a control signal,
an element to determine whether a number of transmissions that has already been received at said element to obtain a received number of transmissions and a number of transmissions transmitted that is stored at said element to store a number of transmissions are equal,
an element to process a control signal to do a process for execution of a control signal associated with a received number of transmissions when a determination at said element to determine a number of transmissions is "equal",
an element to transmit unequal information to the electronics controller that shows that a determination is "unequal" and either a number of transmissions transmitted at the immediately previous time or a number of transmissions created when a determination at an element to determine a number of transmissions is "unequal".

26. A method for operating an electronic device, comprising the steps of:
a step to store a number of transmissions transmitted to an electronics controller;
a step to increment a number of transmissions to obtain a number of transmissions transmitted, a number of transmissions created when a number of transmissions transmitted is not stored, and to increment a number of transmissions making the result a number of transmissions for transmission;
a step to transmit a number of transmissions for transmission;
a step to receive a control signal to receive a control signal associated with a number of transmissions;
a step to obtain a number of transmissions that has already been received as a number of transmissions associated with a received control signal at said step to receive a control signal;
a step to determine whether a number of transmissions that has already been received at said step to obtain a received number of transmissions and a number of transmissions transmitted that is stored are equal;
a step to process a control signal to do a process for the execution of a control signal associated with a received number of transmissions when the determination at said step to determine a number of transmissions is "equal";
a step to transmit to the electronics controller unequal information that shows that a determination is "unequal" and either a number of transmissions transmitted at the immediately previous time or a number of transmissions created when a determination is "unequal" at said element to determine a number of transmissions.

27. An electronic device that receives an encrypted control signal, associated with a number of transmissions, and transmitted by an electronics controller which controls the electronic devices, comprising:
an element to receive an encrypted control,
an element to obtain an encrypted common key that is encrypted by a serial key identifying the electronic device uniquely,
an element to store a serial key as a common key by decrypting the encrypted common key,
an element to decrypt an encrypted common key using a serial key thereby resulted in a decrypted common key,
an element to store said decrypted common key,
an element to create a number of transmissions to create a number of transmissions when a encrypted common key is successfully decrypted at said element to decrypt,
an element to increment a number of transmissions wherein an initial number of transmissions as the created number of transmissions is obtained and a number of transmissions is incremented as a number of transmissions for transmission,
an element to transmit information showing the completion of decryption of an encrypted common key and including the initial number of transmissions or a number of transmissions for transmission.

28. An electronic device that receives an encrypted control signal, associated with a number of transmissions, and transmitted by an electronics controller which controls the electronic device, comprising:
an element to receive an encrypted control,
an element to obtain an encrypted common key that is encrypted by a serial key identifying the electronic device uniquely,
an element to store a serial key as a common key by decrypting the encrypted common key,
an element to decrypt an encrypted common key using a serial key making the result of decryption a common key,
an element to store a common to store a common key that is decrypted at an element to decrypt,
an element to create a number of transmissions to create when a encrypted common key is successfully decrypted at said element to decrypt,
an element to increment a number of transmissions wherein an initial number of transmissions as the created number of transmissions is obtained and a number of transmissions is incremented as a number of transmissions for transmission
an element to encrypt completion information showing the completion of decryption of an encrypted common key and including an initial number of transmissions or a number of transmissions for transmission, and
an element to transmit the encrypted completion information.

29. An electronic device according to claim 28 wherein said element to encrypt further includes a means to add a signature to add an authenticated signature to authenticate another party using a common key decrypted in the completion.

30. A method for operating an electronic device for establishing secure communication between an electronic device and an electronics controller, comprising the steps of:
a step to receive an encrypted control signal that is encrypted;
a step to obtain an common key encrypted by a serial key identifying the electronic device uniquely;
a step to obtain a serial key for making the result of decryption of the encrypted common key an unencrypted common key an unencrypted common key an unencrypted common key;
a step to decrypt wherein a serial key obtained at an element to obtain a serial key is used and an encrypted common key obtained at said step to obtain an encrypted common key is decrypted and made to be a common key;
a step to store a common key decrypted at said step to decrypt;
a step to create a number of transmissions when an encrypted common key is successfully decrypted at said step to decrypt;
a step to increment a number of transmissions wherein an initial number of transmissions is obtained as a created number of transmissions and a number of transmissions is incremented as a number of transmissions for transmission; and
a step to transmit information showing the completion of decryption of a common key and including an initial number of transmissions or a number of transmissions for transmission.
